(19) Europäisches Patentamt
European Patent Office
Office européen des brevets

(11) EP 1 054 911 B1

(12) **EUROPÄISCHE PATENTSCHRIFT**

(45) Veröffentlichungstag und Bekanntmachung des Hinweises auf die Patenterteilung:
**22.01.2003 Patentblatt 2003/04**

(21) Anmeldenummer: **99904880.4**

(22) Anmeldetag: **13.02.1999**

(51) Int Cl.7: **C08F 10/06**, C08F 4/642

(86) Internationale Anmeldenummer:
**PCT/EP99/00958**

(87) Internationale Veröffentlichungsnummer:
**WO 99/042497 (26.08.1999 Gazette 1999/34)**

(54) **KATALYSATORSYSTEM, VERFAHREN ZU SEINER HERSTELLUNG UND SEINE VERWENDUNG ZUR POLYMERISATION VON OLEFINEN**

CATALYST SYSTEM, METHOD FOR THE PRODUCTION THEREOF AND ITS USE FOR THE POLYMERIZATION OF OLEFINS

SYSTEME CATALYSEUR, SON PROCEDE DE PRODUCTION ET SON UTILISATION POUR LA POLYMERISATION D'OLEFINES

(84) Benannte Vertragsstaaten:
**DE ES FR GB IT**

(30) Priorität: **19.02.1998 DE 19806918**

(43) Veröffentlichungstag der Anmeldung:
**29.11.2000 Patentblatt 2000/48**

(73) Patentinhaber: **Basell Polyolefine GmbH
67056 Ludwigshafen (DE)**

(72) Erfinder:
- **GÖRES, Markus
D-65760 Eschborn (DE)**
- **BINGEL, Carsten
D-65830 Kriftel (DE)**
- **FRITZE, Cornelia
D-60529 Frankfurt am Main (DE)**

(74) Vertreter: **Colucci, Giuseppe
Basell Poliolefine Italia S.p.A.,
Intellectual Property,
P.le G. Donegani 12
44100 Ferrara (IT)**

(56) Entgegenhaltungen:
**EP-A- 0 629 632**
**EP-A- 0 646 604**
**EP-A- 0 882 731**
**WO-A-97/11775**
**WO-A-98/40331**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 054 911 B1

Printed by Jouve, 75001 PARIS (FR)

## Beschreibung

Die vorliegende Erfindung betrifft Katalysatorsysteme, ein Verfahren zu ihrer Herstellung und ihre Verwendung in der Polymerisation von Olefinen.

Verfahren zur Herstellung von Polyolefinen mit Hilfe von löslichen, homogenen Katalysatorsystemen, bestehend aus einer Übergangsmetallkomponente vom Typ eines Metallocens und einer Cokatalysator-Komponente vom Typ eines Aluminoxans, einer Lewis-Säure oder einer ionischen Verbindung sind bekannt. Diese Katalysatoren liefern bei hoher Aktivität Polymere und Copolymere mit enger Molmassenverteilung.

Bei Polymerisationsverfahren mit löslichen, homogenen Katalysatorsystemen bilden sich starke Beläge an Reaktorwänden und Rührer aus, wenn das Polymer als Feststoff anfällt. Diese Beläge entstehen immer dann durch Agglomeration der Polymerpartikel, wenn Metallocen und/oder Cokatalysator gelöst in der Suspension vorliegen. Derartige Beläge in den Reaktorsystemen müssen regelmäßig entfernt werden, da diese rasch erhebliche Stärken erreichen, eine hohe Festigkeit besitzen und den Wärmeaustausch zum Kühimedium verhindern. Industriell in den modernen Polymerisationsverfahren in flüssigem Monomer oder in der Gasphase sind solche homogenen Katalysatorsysteme nicht einsetzbar.

Zur Vermeidung der Belagbildung im Reaktor sind geträgerte Katalysatorsysteme vorgeschlagen worden, bei denen das Metallocen und/oder die als Cokatalysator dienende Aluminiumverbindung auf einem anorganischen Trägermaterial fixiert werden.

Aus EP-A-0,576,970 sind Metallocene und entsprechende geträgerte Katalysatorsysteme bekannt. Hochaktive geträgerte Katalysatorsysteme zur Darstellung von technisch relevanten Polyolefinen mit hoher Taktizität und hohem Schmelzpunkt, insbesondere von Polypropylenen, enthalten ansa-Metallocene in racemischer bzw. pseudoracemischer Form und sind beispielsweise aus EP-A-0,530,647; EP-A-0,576,970 und EP-A-0,653,433 bekannt.

Ansa-Metallocene fallen in der Synthese als Isomerengemische (rac-Form und meso-Form bzw. pseudo-rac-/pseudo-meso-Form) an, so daß ein zusätzlicher und aufwendiger Verfahrensschritt zur Trennung von rac- und meso-Form (bzw. der pseudo-Formen) notwendig ist. Eine Defintion der Begriffe rac- bzw. Meso-Form ist Brinzinger et al., Journal of Organometallic Chemistry, 232 (1982) Seite 233 und Schlögl, Top. Stereochem., 1 (1967) Seite 39 ff. Zu entnehmen.

Es bestand somit die Aufgabe, ein kostengünstiges, hochaktives Katalysatorsystem zur Herstellung von Polyolefinen mit hoher Taktizität und hohem Schmelzpunkt, insbesondere von Polypropylenen, zu finden sowie ein einfaches und wirtschaftliches Verfahren zur Herstellung eines solchen Katalysatorsystems, das keine zusätzliche Trennung von rac- und meso-Form der enthaltenen Metallocenkomponenten erfordert.

Überraschenderweise wurde nun gefunden, daß durch ein geträgertes Katalysatorsystem, das mindestens ein speziell substituiertes Metallocen als rac-meso-Isomerengemisch, mindestens einen Cokatalysator, mindestens einen inertisierten Träger und gegebenenfalls mindestens eine weitere Additivkomponente enthält, die der Erfindung zugrunde liegende Aufgabe gelöst wird.

Gegenstand der vorliegenden Erfindung ist ein Katalysatorsystem enthaltend

a) mindestens einen Träger,
b) mindestend einen Cokatalysator,
c) ein rac-meso-Isomerengemisch mindestens eines Metallocens der Formel (I)

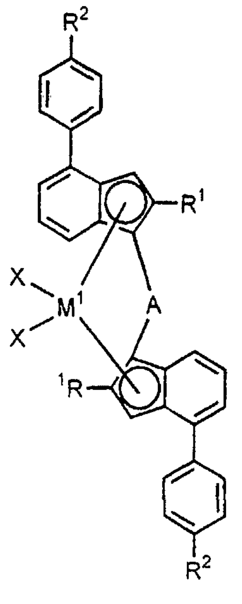

(I)

worin

$R^1$ und $R^2$ gleich oder verschieden sind und ein Wasserstoffatom, eine $C_1$-$C_{20}$-Kohlenwasserstoffgruppe wie beispielsweise eine $C_1$-$C_{20}$-Alkylgruppe, bevorzugt Methyl, Ethyl, n-Propyl, iso-Propyl, n-Butyl, sec-Butyl, iso-Butyl, tert.-Butyl, Pentyl und Hexyl, eine $C_6$-$C_{14}$-Arylgruppe, eine $C_2$-$C_{20}$-Alkenylgruppe, mit der Einschränkung, daß $R^1$ nicht Methyl ist, wenn $R^2$ gleich Wasserstoff ist, $M^1$ ein Übergangsmetall der Gruppe 4, 5 oder 6 des Periodensystems der Elemente ist, wie beispielsweise Titan, Zirkonium, Hafnium, Vanadium, Niob, Tantal, Chrom, Molybdän oder Wolfram, bevorzugt Titan, Zirkonium, Hafnium, besonders bevorzugt Zirkonium, ist,

A eine Verbrückung der Formel

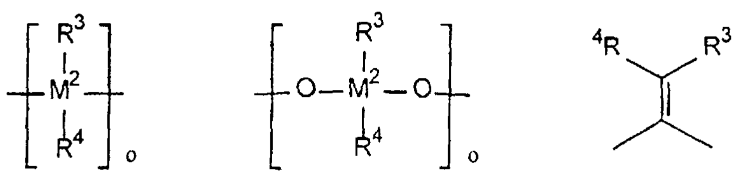

oder $=BR^3$, $AlR^3$, -S-, -SO-, $-SO_2-$, $=NR^3$, $=PR^3$, $=P(O)R^3$, o-Phenylen, 2,2'-Biphenylen ist,

worin

$M^2$ Kohlenstoff, Silizium, Germanium, Zinn, Stickstoff oder Phosphor ist, bevorzugt Kohlenstoff, Silizium oder Germanium, insbesondere Kohlenstoff oder Silizium,

o gleich 1, 2, 3 oder 4 ist, bevorzugt 1 oder 2,

$R^3$ und $R^4$ unabhängig voneinander gleich oder verschieden ein Wasserstoffatom, Halogen, eine $C_1$-$C_{20}$-kohlenstoffhaltige Gruppe wie ($C_1$-$C_{20}$)-Alkyl, insbesondere eine Methylgruppe, ($C_6$-$C_{14}$)-Aryl, insbesondere eine Phenyl- oder Naphthylgruppe, ($C_1$-$C_{10}$)-Alkoxy, ($C_2$-$C_{10}$)-Alkenyl, ($C_7$-$C_{20}$)-Arylalkyl, ($C_7$-$C_{20}$)-Alkylaryl, ($C_6$-$C_{10}$)-Aryloxy, ($C_1$-$C_{10}$)-Fluoralkyl, ($C_6$-$C_{10}$)-Halogenaryl, ($C_2$-$C_{10}$)-Alkinyl, $C_3$-$C_{20}$-Alkylsilyl- wie beispielsweise Trimethylsilyl, Triethylsilyl, tert.-Butyldimethylsilyl, $C_3$-$C_{20}$-Arylsilyl- wie beispielsweise Triphenylsilyl, oder $C_3$-$C_{20}$-Alkylarylsilyl- wie beispielsweise Dimethylphenylsilyl, Diphenylsilyl oder Diphenyl-tert.-butylsilyl bedeuten und $R^3$ und $R^4$ gemeinsam ein mono- oder polycyclisches Ringsystem bilden können, und

A bevorzugt für Dimethylsilandiyl, Dimethylgermandiyl, Ethyliden, Methylethyliden, 1,1-Dimethylethyliden, 1,2-Dimethylethyliden, Tetramethylethyliden, Isopropyliden, Phenylmethylmethyliden, Diphenylmethyliden, besonders bevorzugt Dimethylsilandiyl, Dimethylgermandiyl oder Ethyliden, steht,

X gleich oder verschieden für ein Wasserstoffatom, ein Halogenatom wie Fluor, Chlor, Brom oder Iod, eine Hydroxylgruppe, eine $C_1$-$C_{10}$-Alkylgruppe wie beispielsweise Methyl, Ethyl, Propyl, iso-Propyl, n-Butyl, iso-Butyl, sec-Butyl, tert.-Butyl, Hexyl, Cyclohexyl, eine $C_6$-$C_{15}$-Arylgruppe wie beispielsweise Phenyl, Naphthyl, eine $C_1$-$C_{10}$-Alkoxygruppe wie beispielsweise Methoxy, Ethoxy, tert.-Butoxy, eine $C_6$-$C_{15}$-Aryloxygruppe, eine Benzylgruppe, eine $NR^5_2$-Gruppe, wobei $R^5$ gleich oder verschieden eine $C_1$-$C_{10}$-Alkylgruppe, insbesondere Methyl und/oder Ethyl, eine $C_6$-$C_{15}$-Aryl-

gruppe, eine $(CH_3)_3Si$-Gruppe steht, bevorzugt ein Chloratom, ein Fluoratom, eine Methylgruppe, eine Benzylgruppe, eine $NMe_2$-Gruppe, besonders bevorzugt ein Chloratom oder eine Methylgruppe, steht,
wobei das Verhältnis von rac-Isomer zu meso-Isomer des Metallocens der Formel (I) im erfindungsgemäßen Katalysatorsystem zwischen 1:10 und 2:1, bevorzugt zwischen 1:2 und 3:2, liegt.

Bevorzugt handelt es sich bei dem Metallocen der Formel (I) um die Verbindungen:: Dimethylsilandiylbis (2-methyl-4-(4'-tert.-butyl-phenyl)-indenyl)zirkoniumdichlorid Dimethylsilandiylbis(2-methyl-4-(4'-tert.-butyl-phenyl)-indenyl)hafnuimdichlorid Dimethylsilandiylbis(2-methyl-4-(4'-tert.-butyl-phenyl)-indenyl)titandichlorid Dimethylsilandiylbis(2-methyl-4-(4'-methyl-phenyl)-indenyl)zirkoniumdichlorid Dimethylsilandiylbis(2-methyl-4-(4'-ethyl-phenyl)-indenyl)zirkoniumdichlorid Dimethylsilandiylbis(2-methyl-4-(4'-n-propyl-phenyl)-indenyl)zirkoniumdichlorid Dimethylsilandiylbis(2-methyl-4-(4'-iso-propyl-phenyl)-indenyl)zirkoniumdichlorid Dimethylsilandiylbis(2-methyl-4-(4'-n-butyl-phenyl)-indenyl)zirkoniumdichlorid Dimethylsilandiylbis(2-methyl-4-(4'-hexyl-phenyl)-indenyl)zirkoniumdichlorid Dimethylsilandiylbis(2-methyl-4-(4'-sec-butyl-phenyl)-indenyl)zirkoniumdichlorid Dimethylsilandiylbis(2-ethyl-4-phenyl)-indenyl)zirkoniumdichlorid Dimethylsilandiylbis(2-ethyl-4-(4'-methyl-phenyl)-indenyl)zirkoniumdichlorid Dimethylsilandiylbis(2-ethyl-4-(4'-ethyl-phenyl)-indenyl)zirkoniumdichlorid Dimethylsilandiylbis(2-ethyl-4-(4'-n-propyl-phenyl)-indenyl) zirkoniumdichlorid Dimethylsilandiylbis(2-ethyl-4-(4'-iso-propyl-phenyl)-indenyl)zirkoniumdichlorid Dimethylsilandiylbis(2-ethyl-4-(4'-n-butyl-phenyl)-indenyl)zirkoniumdichlorid Dimethylsilandiylbis(2-ethyl-4-(4'-hexyl-phenyl)-indenyl) zirkoniumdichlorid Dimethylsilandiylbis(2-ethyl-4-(4'-pentyl-phenyl)-indenyl)zirkoniumdichlorid Dimethylsilandiylbis (2-ethyl-4-(4'-cyclohexyl-phenyl)-indenyl)zirkoniumdichlorid Dimethylsilandiylbis(2-ethyl-4-(4'-sec-butyl-phenyl)-indenyl)zirkoniumdichlorid Dimethylsilandiylbis(2-ethyl-4-(4'-tert.-butyl-phenyl)-indenyl)zirkoniumdichlorid Dimethylsilandiylbis(2-n-propyl-4-phenyl)-indenyl)zirkoniumdichlorid Dimethylsilandiylbis(2-n-propyl-4-(4'-methyl-phenyl)-indenyl)zirkoniumdichlorid Dimethylsilandiylbis(2-n-propyl-4-(4'-ethyl-phenyl)-indenyl)zirkoniumdichlorid Dimethylsilandiylbis (2-n-propyl-4-(4'-n-propyl-phenyl)-indenyl)zirkoniumdichlorid Dimethylsilandiylbis(2-n-propyl-4-(4'-iso-propyl-phenyl)-indenyl)zirkoniumdichlorid Dimethylsilandiylbis(2-n-propyl-4-(4'-n-butyl-phenyl)-indenyl)zirkoniumdichlorid Dimethylsilandiylbis(2-n-propyl-4-(4'-hexyl-phenyl)-indenyl)zirkoniumdichlorid Dimethylsilandiylbis(2-n-propyl-4-(4'-cyclohexyl-phenyl)-indenyl)zirkoniumdichlorid Dimethylsilandiylbis(2-n-propyl-4-(4'-sec-butyl-phenyl)-indenyl)zirkoniumdichlorid Dimethylsilandiylbis(2-n-propyl-4-(4'-tert.-butyl-phenyl)-indenyl)zirkoniumdichlorid Dimethylsilandiylbis(2-n-butyl-4-phenyl)-indenyl)zirkoniumdichlorid Dimethylsilandiylbis(2-n-butyl-4-(4'-methyl-phenyl)-indenyl)zirkoniumdichlorid Dimethylsilandiylbis(2-n-butyl-4-(4'-ethyl-phenyl)-indenyl)zirkoniumdichlorid Dimethylsilandiylbis(2-n-butyl-4-(4'-n-propyl-phenyl)-indenyl)zirkoniumdichlorid Dimethylsilandiylbis(2-n-butyl-4-(4'-iso-propyl-phenyl)-indenyl)zirkoniumdichlorid Dimethylsilandiylbis(2-n-butyl-4-(4'-n-butyl-phenyl)-indenyl)zirkoniumdichlorid Dimethylsilandiylbis(2-n-butyl-4-(4'-hexyl-phenyl)-indenyl)zirkoniumdichlorid Dimethylsilandiylbis(2-n-butyl-4-(4'-cyclohexyl-phenyl)-indenyl)zirkoniumdichlorid Dimethylsilandiylbis(2-n-butyl-4-(4'-sec-butyl-phenyl)-indenyl)zirkoniumdichlorid Dimethylsilandiylbis(2-n-butyl-4-(4'-tert.-butyl-phenyl)-indenyl)zirkoniumdichlorid Dimethylsilandiylbis(2-hexyl-4-phenyl)-indenyl)zirkoniumdichlorid Dimethylsilandiylbis(2-hexyl-4-(4'-methyl-phenyl)-indenyl)zirkoniumdichlorid Dimethylsilandiylbis(2-hexyl-4-(4'-ethyl-phenyl)-indenyl)zirkoniumdichlorid Dimethylsilandiylbis(2-hexyl-4-(4'-n-propyl-phenyl)-indenyl)zirkoniumdichlorid Dimethylsilandiylbis(2-hexyl-4-(4'-iso-propyl-phenyl)-indenyl)zirkoniumdichlorid Dimethylsilandiylbis(2-hexyl-4-(4'-n-butyl-phenyl)-indenyl)zirkoniumdichlorid Dimethylsilandiylbis(2-hexyl-4-(4'-hexyl-phenyl)-indenyl)zirkoniumdichlorid Dimethylsilandiylbis(2-hexyl-4-(4'-cyclohexyl-phenyl)-indenyl)zirkoniumdichlorid Dimethylsilandiylbis (2-hexyl-4-(4'-sec-butyl-phenyl)-indenyl)zirkoniumdichlorid Dimethylsilandiylbis(2-hexyl-4-(4'-tert.-butyl-phenyl)-indenyl)zirkoniumdichlorid Dimethylsilandiylbis(2-methyl-4-(4'-tert.-butyl-phenyl)-indenyl)zirkoniumbis(dimethylamid) Dimethylsilandiylbis(2-ethyl-4-(4'-tert.-butyl-phenyl)-indenyl)zirkoniumdibenzyl Dimethylsilandiylbis(2-methyl-4-(4'-tert.-butyl-phenyl)-indenyl)zirkoniumdimethyl Dimethylgermandiylbis(2-ethyl-4-(4'-tert.-butyl-phenyl)-indenyl)zirkoniumdichlorid Dimethylgermandiylbis(2-ethyl-4-(4'-tert.-butyl-phenyl)-indenyl)hafniumdichlorid Dimethylgermandiylbis(2-propyl-4-(4'-tert.-butyl-phenyl)-indenyl)titandichlorid Dimethylgermandiylbis(2-methyl-4-(4'-tert.-butyl-phenyl)-indenyl)zirkoniumdichlorid Ethylidenbis(2-ethyl-4-phenyl)-indenyl)zirkoniumdichlorid Ethylidenbis(2-ethyl-4-(4'-tert.-butyl-phenyl)-indenyl)zirkoniumdichlorid Ethylidenbis(2-n-propyl-4-(4'-tert.-butyl-phenyl)-indenyl)zirkoniumdichlorid Ethylidenbis(2-n-butyl-4-(4'-tert.-butyl-phenyl)-indenyl)titandichlorid Ethylidenbis(2-hexyl-4-(4'-tert.-butyl-phenyl)-indenyl)zirkoniumdibenzyl Ethylidenbis(2-ethyl-4-(4'-tert.-butyl-phenyl)-indenyl)hafniumdibenzyl Ethylidenbis(2-methyl-4-(4'-tert.-butyl-phenyl)-indenyl)titandibenzyl Ethylidenbis(2-methyl-4-(4'-tert.-butyl-phenyl)-indenyl)zirkoniumdichlorid Ethylidenbis(2-ethyl-4-(4'-tert.-butyl-phenyl)-indenyl)hafniumdimethyl Ethylidenbis(2-n-propyl-4--phenyl)-indenyl)titandimethyl Ethylidenbis(2-ethyl-4-(4'-tert.-butyl-phenyl)-indenyl)zirkoniumbis(dimethylamid) Ethylidenbis(2-ethyl-4-(4'-tert.-butyl-phenyl)-indenyl)hafniumbis(dimethylamid) Ethylidenbis(2-ethyl-4-(4'-tert.-butyl-phenyl)-indenyl)titanbis(dimethylamid) Methylethylidenbis(2-ethyl-4-(4'-tert.-butyl-phenyl)-indenyl)zirkoniumdichlorid Methylethylidenbis(2-ethyl-4-(4'-tert.-butyl-phenyl)-indenyl)hafniumdichlorid Phenylphosphandiyl(2-ethyl-4-(4'-tert.-butyl-phenyl)-indenyl)zirkoniumdichlorid Phenylphosphandiyl(2-methyl-4-(4'-tert.-butyl-phenyl)-indenyl) zirkoniumdichlorid Phenylphosphandiyl (2-ethyl-4-(4'-tert.-butyl-phenyl)-indenyl) zirkoniumdichlorid

Das Verhältnis von rac-Isomer zu meso-Isomer der Metallocenkomponente der Formel (I) liegt im erfindungsgemäßen Katalysatorsystem zwischen 1:10 und 2:1, bevorzugt zwischen 1:2 und 3:2.

Die Herstellungsverfahren für Metallocene der Formel (I) sind z.B. in Journal of Organometallic Chem. 288 (1985) 63 - 67 und in den dort zitierten Dokumenten eingehend beschrieben.
Das erfindungsgemäße Katalysatorsystem enthält vorzugsweise zusätzlich mindestens einen Cokatalysator.
Die Cokatalysatorkomponente, die erfindungsgemäß im Katalysatorsystem enthalten sein kann, enthält mindestens eine Verbindung vom Typ eines Aluminoxans oder einer Lewis-Säure oder einer ionischen Verbindung, die durch Reaktion mit einem Metallocen dieses in eine kationische Verbindung überführt.
Als Aluminoxan wird bevorzugt eine Verbindung der allgemeinen Formel (II)

$$(R\ AlO)_n \qquad (II)$$

verwendet.
Weitere geeignete Aluminoxane können z.B. cyclisch wie in Formel (III)

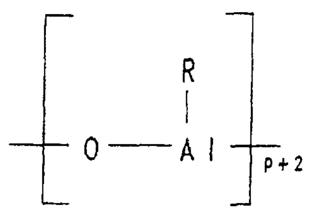

(III)

oder linear wie in Formel (IV)

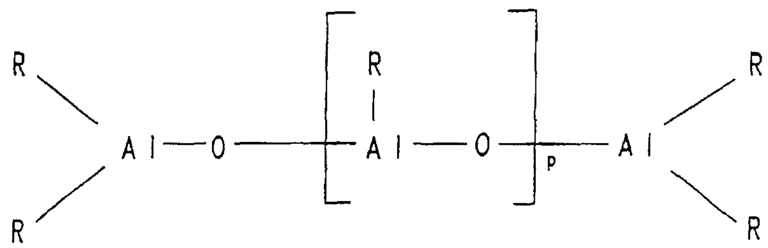

(IV)

oder vom Cluster-Typ wie in Formel (V)

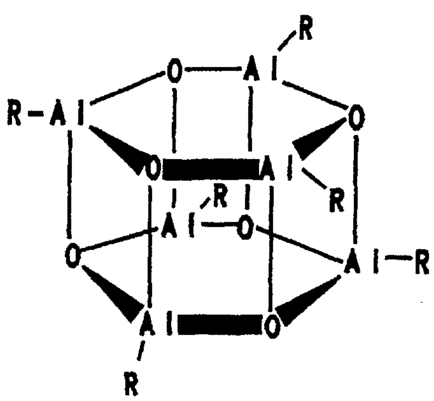

(V)

sein. Derartige Aluminoxane werden beispielsweise in JACS 117 (1995), 6465-74, Organometallics 13 (1994), 2957-2969, beschrieben.
Die Reste R in den Formeln (II), (III), (IV) und (V) können gleich oder verschieden sein und eine $C_1$-$C_{20}$-Kohlenwasserstoffgruppe wie eine $C_1$-$C_6$-Alkylgruppe, eine $C_6$-$C_{18}$-Arylgruppe, Benzyl oder Wasserstoff bedeuten, und p eine ganze Zahl von 2 bis 50, bevorzugt 10 bis 35 bedeuten.

Bevorzugt sind die Reste R gleich und bedeuten Methyl, Isobutyl, n-Butyl, Phenyl oder Benzyl, besonders bevorzugt Methyl.

Sind die Reste R unterschiedlich, so sind sie bevorzugt Methyl und Wasserstoff, Methyl und Isobutyl oder Methyl und n-Butyl, wobei Wasserstoff bzw. Isobutyl oder n-Butyl bevorzugt zu 0,01 - 40 % (Zahl der Reste R) enthalten sind.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z. B. Toluol) umgesetzt wird.

Zur Herstellung eines Aluminoxans mit verschiedenen Alkylgruppen R werden entsprechend der gewünschten Zusammensetzung und Reaktivität zwei verschiedene Aluminiumtrialkyle ($AlR_3$ + $AlR'_3$) mit Wasser umgesetzt (vgl. S. Pasynkiewicz, Polyhedron 9 (1990) 429 und EP-A-0,302,424).

Unabhängig von der Art der Herstellung ist allen Aluminoxanlösungen ein wechseinder Gehalt an nicht umgesetzter Aluminiumausgangsverbindung, die in freier Form oder als Addukt vorliegt, gemeinsam.

Als Lewis-Säure werden bevorzugt mindestens eine bor- oder aluminiumorganische Verbindung eingesetzt, die $C_1$-$C_{20}$-kohlenstoffhaltige Gruppen enthalten, wie verzweigte oder unverzweigte Alkyl- oder Halogenalkyl, wie z. B. Methyl, Propyl, Isopropyl, Isobutyl, Trifluormethyl, ungesättigte Gruppen, wie Aryl oder Halogenaryl, wie Phenyl, Tolyl, Benzylgruppen, p-Fluorophenyl, 3,5-Difluorophenyl, Pentachlorophenyl, Pentafluorophenyl, 3,4,5 Trifluorophenyl und 3,5 Di(trifluoromethyl)phenyl.

Beispiele für Lewis-Säuren sind Trimethylaluminium, Triethylaluminium, Triisobutylaluminium, Tributylaluminium, Trifluoroboran, Triphenylboran, Tris(4-fluorophenyl)boran, Tris(3,5-difluorophenyl)boran, Tris(4-fluoromethylphenyl) boran, Tris(pentafluorophenyl)boran, Tris(tolyl)boran, Tris(3,5-dimethylphenyl)boran, Tris(3,5-difluorophenyl)boran und/oder Tris(3,4,5-trifluorophenyl)boran. Insbesondere bevorzugt ist Tris(pentafluorophenyl)boran.

Als ionische Cokatalysatoren werden bevorzugt Verbindungen eingesetzt, die ein nicht koordinierendes Anion enthalten, wie beispielsweise Tetrakis(pentafluorophenyl)borate, Tetraphenylborate, $SbF_6^-$, $CF_3SO_3^-$ oder $ClO_4^-$.

Als kationisches Gegenion werden Lewis-Basen wie z.B. Metyhlamin, Anilin, Dimethylamin, Diethylamin, N-Methylanilin, Diphenylamin, N,N-Dimethylanilin, Trimethylamin, Triethylamin, Tri-n-butylamin, Methyldiphenylamin, Pyridin, p-Bromo-N,N-dimethylanilin, p-Nitro-N,N-dimethylanilin, Triethylphosphin, Triphenylphosphin, Diphenylphosphin, Tetrahydrothiophen und Triphenylcarbenium eingesetzt.

Beispiele für solche erfindungsgemäßen ionischen Verbindungen sind Triethylammoniumtetra(phenyl)borat, Tributylammoniumtetra(phenyl)borat, Trimethylammoniumtetra(tolyl)borat, Tributylammoniumtetra(tolyl)borat, Tributylammoniumtetra(pentafluorophenyl)borat, Tributylammoniumtetra(pentafluorophenyl)aluminat, Tripropylammoniumtetra(dimethylphenyl)borat, Tributylammoniumtetra(trifluoromethylphenyl)borat, Tributylammoniumtetra(4-fluorophenyl)borat, N,N-Dimethylaniliniumtetra(phenyl)borat, N,N-Diethylaniliniumtetra(phenyl)borat, N,N-Dimethylaniliniumtetrakis(pentafluorophenyl)borate, N,N-Dimethylaniliniumtetrakis(pentafluorophenyl)aluminat, Di(propyl)ammoniumtetrakis(pentafluorophenyl)borat, Di(cyclohexyl)ammoniumtetrakis(pentafluorophenyl)borat, Triphenylphosphoniumtetrakis(phenyl)borat, Triethylphosphoniumtetrakis(phenyl)borat, Diphenylphosphoniumtetrakis(phenyl)borat, Tri (methylphenyl)phosphoniumtetrakis(phenyl)borat, Tri(dimethylphenyl)phosphoniumtetrakis(phenyl)borat, Triphenylcarbeniumtetrakis(pentafluorophenyl)borat, Triphenylcarbeniumtetrakis(pentafluorophenyl)aluminat, Triphenylcarbeniumtetrakis(phenyl)aluminat, Ferroceniumtetrakis(pentafluorophenyl)borat und/oder Ferroceniumtetrakis(pentafluorophenyl)aluminat. Bevorzugt sind Triphenylcarbeniumtetrakis(pentafluorophenyl)borat und/oder N,N-Dimethylaniliniumtetrakis(pentafluorophenyl)borat.

Es können auch Gemische mindestens einer Lewis-Säure und mindestens einer ionischen Verbindung eingesetzt werden.

Als Cokatalysatorkomponenten sind ebenfalls Boran- oder Carboran-Verbindungen wie z.B. 7,8-Dicarbaundecaboran(13), Undecahydrid-7,8-dimethyl-7,8-dicarbaundecaboran, Dodecahydrid-1-phenyl-1,3-dicarbanonaboran, Tri(butyl)ammoniumundecahydrid-8-ethyl-7,9-dicarbaundecaborat, 4-Carbanonaboran(14)Bis(tri(butyl)ammonium) nonaborat, Bis(tri(butyl)ammonium)undecaborat, Bis(tri(butyl)ammonium)dodecaborat, Bis(tri(butyl)ammonium)decachlorodecaborat, Tri(butyl)ammonium-1-carbadecaborate, Tri(butyl)ammonium-1-carbadodecaborate, Tri(butyl)ammonium-1-trimethylsilyl-1-carbadecaborate, Tri(buyl)ammoniumbis(nonahydrid-1,3-dicarbonnonaborat)cobaltate(III), Tri(butyl)ammoniumbis(undecahydrid-7,8-dicarbaundecaborat)ferrat(III) von Bedeutung.

Die Trägerkomponente des erfindungsgemäßen Katalysatorsystems kann ein beliebiger organischer oder anorganischer, inerter Feststoff sein, insbesondere ein poröser Träger wie Talk, anorganische Oxide und feinteilige Polymerpulver (z.B. Polyolefine).

Geeignete anorganische Oxide finden sich in den Gruppen 2,3,4,5,13,14,15 und 16 des Periodensystems der Elemente. Beispiele für als Träger bevorzugte Oxide umfassen Siliciumdioxid, Aluminiumoxid, sowie Mischoxide der beiden Elemente und entsprechende Oxid-Mischungen. Andere anorganische Oxide, die allein oder in Kombination mit den zuletzt genannten bevorzugten oxiden Trägern eingesetzt werden können, sind z.B. MgO, $ZrO_2$, $TiO_2$ oder

$B_2O_3$ ,um nur einige zu nennen.

Die verwendeten Trägermaterialien weisen eine spezifische Oberfläche im Bereich von 10 bis 1000 $m^2$/g, ein Porenvolumen im Bereich von 0,1 bis 5 ml/g und eine mittlere Partikelgröße von 1 bis 500 µm auf. Bevorzugt sind Träger mit einer spezifischen Oberfläche im Bereich von 50 bis 500 µm , einem Porenvolumen im Bereich zwischen 0,5 und 3,5 ml/g und einer mittleren Partikelgröße im Bereich von 5 bis 350 µm. Besonders bevorzugt sind Träger mit einer spezifischen Oberfläche im Bereich von 200 bis 400 $m^2$/g, einem Porenvolumen im Bereich zwischen 0,8 bis 3,0 ml/g und einer mittleren Partikelgröße von 10 bis 200 µm.

Wenn das verwendete Trägermaterial von Natur aus einen geringen Feuchtigkeitsgehalt oder Restlösemittelgehalt aufweist, kann eine Dehydratisierung oder Trocknung vor der Verwendung unterbleiben. Ist dies nicht der Fall, wie bei dem Einsatz von Silicagel als Trägermaterial, ist eine Dehydratisierung oder Trocknung empfehlenswert. Die thermische Dehydratisierung oder Trocknung des Trägermaterials kann unter Vakuum und gleichzeitiger Inertgasüberlagerung (z.B. Stickstoff) erfolgen. Die Trocknungstemperatur liegt im Bereich zwischen 100 und 1000 °C, vorzugsweise zwischen 200 und 800 °C. Der Parameter Druck ist in diesem Fall nicht entscheidend. Die Dauer des Trocknungsprozesses kann zwischen 1 und 24 Stunden betragen. Kürzere oder längere Trocknungsdauern sind möglich, vorausgesetzt, daß unter den gewählten Bedingungen die Gleichgewichtseinstellung mit den Hydroxylgruppen auf der Trägeroberfläche erfolgen kann, was normalerweise zwischen 4 und 8 Stunden erfordert.

Eine Dehydratisierung oder Trocknung des Trägermaterials ist auch auf chemischem Wege möglich, indem das adsorbierte Wasser und die Hydroxylgruppen auf der Oberfläche mit geeigneten Inertisierungsmitteln zur Reaktion gebracht werden. Durch die Umsetzung mit dem Inertisierungsreagenz können die Hydroxylgruppen vollständig oder auch teilweise in eine Form überführt werden, die zu keiner negativen Wechselwirkung mit den katalytisch aktiven Zentren führen. Geeignete Inertisierungsmittel sind beispielsweise Siliciumhalogenide und Silane, wie Siliciumtetrachlorid, Chlortrimethylsilan, Dimethylaminotrichlorsilan oder metallorganische Verbindungen von Aluminium-, Bor und Magnesium wie beispielsweise Trimethylaluminium, Triethylaluminium, Triisobutylaluminium, Triethylboran, Dibutylmagnesium. Die chemische Dehydratisierung oder Inertisierung des Trägermaterials erfolgt beispielsweise dadurch, daß man unter Luft- und Feuchtigkeitsausschluß eine Suspension des Trägermaterials in einem geeigneten Lösemittel mit dem Inertisierungsreagenz in reiner Form oder gelöst in einem geeigneten Lösemittel zur Reaktion bringt. Geeignete Lösemittel sind z.B. aliphatische oder aromatische Kohlenwasserstoffe wie Pentan, Hexan, Heptan, Toluol oder Xylol. Die Inertisierung erfolgt bei Temperaturen zwischen 25 °C und 120 °C, bevorzugt zwischen 50 und 70 °C. Höhere und niedrigere Temperaturen sind möglich. Die Dauer der Reaktion beträgt zwischen 30 Minuten und 20 Stunden, bevorzugt 1 bis 5 Stunden. Nach dem vollständigen Ablauf der chemischen Dehydratisierung wird das Trägermaterial durch Filtration unter Inertbedingungen isoliert, ein- oder mehrmals mit geeigneten inerten Lösemitteln wie sie bereits zuvor beschrieben worden sind gewaschen und anschließend im Inertgasstrom oder am Vakuum getrocknet.

Organische Trägermaterialien wie feinteilige Polyolefinpulver (z.B. Polyethylen, Polypropylen oder Polystyrol) können auch verwendet werden und sollten ebenfalls vor dem Einsatz von anhaftender Feuchtigkeit, Lösemittelresten oder anderen Verunreinigungen durch entsprechende Reinigungs- und Trocknungsoperationen befreit werden.

Das Katalysatorsystem wird erfindungsgemäß hergestellt, indem mindestens ein speziell substituiertes Metallocen als rac-meso-Isomerengemisch, mindestens ein Cokatalysator und mindestens ein inertisierter Träger gemischt werden.

Zur Darstellung des geträgerten Katalysatorsystems wird mindestens eine der oben beschriebenen Metallocen-Komponenten in einem geeigneten Lösemittel mit mindestens einer Cokatalysatorkomponente in Kontakt gebracht, wobei bevorzugt ein lösliches Reaktionsprodukt, ein Addukt oder ein Gemisch erhalten wird.

Die so erhaltene Zubereitung wird dann mit dem dehydratisierten oder inertisierten Trägermaterial vermischt, das Lösemittel entfernt und das resultierende geträgerte Metallocen-Katalysatorsystem getrocknet, um sicherzustellen, daß das Lösemittel vollständig oder zum größten Teil aus den Poren des Trägermaterials entfernt wird. Der geträgerte Katalysator wird als frei fließendes Pulver erhalten.

Ein Verfahren zur Darstellung eines frei fließenden und gegebenenfalls vorpolymerisierten geträgerten Katalysatorsystems umfaßt die folgenden Schritte:

a) Herstellung einer Metallocen/Cokatalysator-Mischung in einem geeigneten Löse- oder Suspensionsmittel, wobei die Metallocen-Komponente eine der zuvor beschriebenen Strukturen besitzt.
b) Aufbringen der Metallocen/Cokatalysatormischung auf einen porösen, bevorzugt anorganischen dehydratisierten Träger
c) Entfernen des Hauptanteils an Lösemittel von der resultierenden Mischung
d) Isolierung des geträgerten Katalysatorsystems
e) Gegebenenfalls eine Vorpolymerisation des erhaltenen geträgerten Katalysatorsystems mit einem oder mehreren olefinischen Monomer(en), um ein vorpolymerisiertes geträgertes Katalysatorsystem zu erhalten.

Bevorzugte Lösemittel für die Herstellung der Metallocen/Cokatalysator-Mischung sind Kohlenwasserstoffe und Kohlenwasserstoffgemische, die bei der gewählten Reaktionstemperatur flüssig sind und in denen sich die Einzelkomponenten bevorzugt lösen. Die Löslichkeit der Einzelkomponenten ist aber keine Voraussetzung, wenn sichergestellt ist, daß das Reaktionsprodukt aus Metallocenund Cokatalysatorkomponenten in dem gewählten Lösemittel löslich ist. Beispiele für geeignete Lösemittel umfassen Alkane wie Pentan, Isopentan, Hexan, Heptan, Octan, und Nonan; Cycloalkane wie Cyclopentan und Cyclohexan; und Aromaten wie Benzol, Toluol. Ethylbenzol und Diethylbenzol. Ganz besonders bevorzugt ist Toluol.

Die bei der Präparation des geträgerten Katalysatorsystems eingesetzten Mengen an Aluminoxan und Metallocen können über einen weiten Bereich variiert werden. Bevorzugt wird ein molares Verhältnis von Aluminium zum Übergangsmetall im Metallocen von 10 : 1 bis 1000 : 1 eingestellt, ganz besonders bevorzugt ein Verhältnis von 50 : 1 bis 500 : 1.
Im Fall von Methylaluminoxan werden bevorzugt 30 % ige toluolische Lösungen eingesetzt; die Verwendung von 10 %igen Lösungen ist aber auch möglich.

Zur Voraktivierung wird das Metallocen in Form eines Feststoffes in einer Lösung des Aluminoxans in einem geeigneten Lösemittel aufgelöst. Es ist auch möglich, das Metallocen getrennt in einem geeigneten Lösemittel aufzulösen und diese Lösung anschließend mit der Aluminoxan-Lösung zu vereinigen. Bevorzugt wird Toluol verwendet.
Die Voraktivierungszeit beträgt 1 Minute bis 200 Stunden.
Die Voraktivierung kann bei Raumtemperatur (25 °C) stattfinden. Die Anwendung höherer Temperaturen kann im Einzelfall die erforderliche Dauer der Voraktivierung verkürzen und eine zusätzliche Aktivitätssteigerung bewirken. Höhere Temperatur bedeutet in diesem Fall ein Bereich zwischen 50 und 100 °C.

Die voraktivierte Lösung bzw. das Metallocen/Cokatalysator-Gemisch wird anschließend mit einem inerten Trägermaterial, üblicherweise Kieselgel, das in Form eines trockenen Pulvers oder als Suspension in einem der oben genannten Lösemittel vorliegt, vereinigt. Bevorzugt wird das Trägermaterial als Pulver eingesetzt. Die Reihenfolge der Zugabe ist dabei beliebig. Die voraktivierte Metallocen-Cokatalysator-Lösung bzw. das Metallocen-Cokatalysatorgemisch kann zum vorgelegten Trägermaterial dosiert, oder aber das Trägermaterial in die vorgelegte Lösung eingetragen werden.
Das Volumen der voraktivierten Lösung bzw. des Metallocen-Cokatalysatorgemisches kann 100 % des Gesamtporenvolumens des eingesetzten Trägermaterials überschreiten oder aber bis zu 100 % des Gesamtporenvolumens betragen.

Die Temperatur, bei der die voraktivierte Lösung bzw. das Metallocen-Cokatalysatorgemisch mit dem Trägermaterial in Kontakt gebracht wird, kann im Bereich zwischen 0 und 100 °C variieren. Niedrigere oder höhere Temperaturen sind aber auch möglich.

Anschließend wird das Lösemittel vollständig oder zum größten Teil vom geträgerten Katalysatorsystem entfernt, wobei die Mischung gerührt und gegebenenfalls auch erhitzt werden kann. Bevorzugt wird sowohl der sichtbare Anteil des Lösemittels als auch der Anteil in den Poren des Trägermaterials entfernt. Das Entfernen des Lösemittels kann in konventioneller Art und Weise unter Anwendung von Vakuum und/oder Spülen mit Inertgas erfolgen. Beim Trocknungsvorgang kann die Mischung erwärmt werden, bis das freie Lösemittel entfernt worden ist, was üblicherweise 1 bis 3 Stunden bei einer vorzugsweise gewählten Temperatur zwischen 30 und 60 °C erfordert. Das freie Lösemittel ist der sichtbare Anteil an Lösemittel in der Mischung. Unter Restlösemittel versteht man den Anteil, der in den Poren eingeschlossen ist. Alternativ zu einer vollständigen Entfernung des Lösemittels kann das geträgerte Katalysatorsystem auch nur bis zu einem gewissen Restlösemittelgehalt getrocknet werden, wobei das freie Lösemittel vollständig entfernt worden ist. Anschließend kann das geträgerte Katalysatorsystem mit einem niedrig siedenden Kohlenwasserstoff wie Pentan oder Hexan gewaschen und erneut getrocknet werden.

Das erfindungsgemäß dargestellte geträgerte Katalysatorsystem kann entweder direkt zur Polymerisation von Olefinen eingesetzt oder vor seiner Verwendung in einem Polymerisationsprozeß mit einem oder mehreren olefinischen Monomeren vorpolymerisiert werden. Die Ausführung der Vorpolymerisation von geträgerten Katalysatorsystemen ist beispielsweise in WO 94/28034 beschrieben.
Als Additiv kann während oder nach der Herstellung des geträgerten Katalysatorsystems eine geringe Menge eines Olefins bevorzugt eines α-Olefins (beispielsweise Styrol oder Phenyldimethylvinylsilan) als aktivitätssteigernde Komponente oder beispielsweise eines Antistatikums (wie in der U.S.-amerikanische Patentanmeldung Serial No. 08/365280 beschrieben) zugesetzt werden. Das molare Verhältnis von Additiv zu Metallocenkomponente Verbindung (I) beträgt dabei bevorzugt zwischen 1 : 1000 bis 1000 : 1, ganz besonders bevorzugt 1 : 20 bis 20 : 1.

Die vorliegende Erfindung betrifft auch ein Verfahren zur Herstellung eines Polyolefins durch Polymerisation einer oder mehrerer Olefine in Gegenwart des erfindungsgemäßen Katalysatorsystems, enthaltend mindestens eine Übergangsmetallkomponente der Formel (I). Unter dem Begriff Polymerisaton wird eine Homopolymerisation wie auch eine Copolymerisation verstanden.

Bevorzugt werden Olefine der Formel $R_m$-CH=CH-$R_n$ polymerisiert, worin $R_m$ und $R_n$ gleich oder verschieden sind und ein Wasserstoffatom oder einen kohlenstoffhaltigen Rest mit 1 bis 20 C-Atomen, insbesondere 1 bis 10 C-Atome, bedeuten, und $R_m$ und $R_n$ zusammen mit den sie verbindenden Atomen einen oder mehrere Ringe bilden können. Beispiele für solche Olefine sind 1-Olefine mit 2 - 40, vorzugsweise 2 bis 10 C-Atomen, wie Ethen, Propen, 1-Buten,

1-Penten, 1-Hexen, 4-Methyl-1-penten oder 1-Octen, Styrol, Diene wie 1,3-Butadien, 1,4-Hexadien, Vinylnorbornen , Norbornadien, Ethylnorbornadien und cyclische Olefine wie Norbornen, Tetracyclododecen oder Methylnorbornen. Bevorzugt werden in dem erfindungsgemäßen Verfahren Propen oder Ethen homopolymerisiert, oder Propen mit Ethen und/oder mit einem oder mehreren 1-Olefinen mit 4 bis 20 C-Atomen, wie Hexen, und/oder einem oder mehreren Dienen mit 4 bis 20 C-Atomen, wie 1,4-Butadien, Norbornadien, Ethylidennorbonen oder Ethylnorbornadien, copolymerisiert. Beispiele solcher Copolymere sind Ethen/Propen-Copolymere oder Ethen/Propen/1,4-Hexadien-Terpolymere.

Die Polymerisation wird bei einer Temperatur von - 60 bis 300 °C , bevorzugt 50 bis 200 °C, ganz besonders bevorzugt 50 - 80 °C durchgeführt. Der Druck beträgt 0,5 bis 2000 bar, bevorzugt 5 bis 64 bar.

Die Polymerisation kann in Lösung, in Masse, in Suspension oder in der Gasphase, kontinuierlich oder diskontinuierlich, ein- oder mehrstufig durchgeführt werden.

Das erfindungsgemäß dargestellte Katalysatorsystem kann als einzige Katalysatorkomponente für die Polymerisation von Olefinen mit 2 bis 20 C-Atomen eingesetzt werden, oder bevorzugt in Kombination mit mindestens einer Alkylverbindung der Elemente aus der I. bis III. Hauptgruppe des Periodensystems, wie z.B. einem Aluminium-, Magnesium- oder Lithiumalkyl oder einem Aluminoxan eingesetzt werden. Die Alkylverbindung wird dem Monomeren oder Suspensionsmittel zugesetzt und dient zur Reinigung des Monomeren von Substanzen, die die Katalysatoraktivität beeinträchtigen können. Die Menge der zugesetzten Alkylverbindung hängt von der Qualität der eingesetzten Monomere ab.

Als Molmassenregler und/oder zur Steigerung der Aktivität wird, falls erforderlich, Wasserstoff zugegeben.

Bei der Polymerisation kann außerdem ein Antistatikum zusammen mit oder getrennt von dem eingesetzten Katalysatorsystem in das Polymerisationssystem eindosiert werden.

Die mit dem erfindungsgemäßen Katalysatorsystem dargestellten Polymere zeigen eine gleichmäßige Kornmorphologie und weisen keine Feinkornanteile auf. Bei der Polymerisation mit dem erfindungsgemäßen Katalysatorsyatem treten keine Beläge oder Verbackungen auf.

Mit dem erfindungsgemäßen Katalysatorsystem werden Polymere, wie Polypropylen mit außerordentlich hoher Stereo- und Regiospezifität erhalten.

Besonders charakteristisch für die Stereo- und Regiospezifität von Polymeren, insbesondere von Polypropylen, ist die Triaden-Taktizität (TT) und der Anteil an 2-1-insertierten Propeneinheiten (RI), die sich aus den $^{13}$C-NMR-Spektren ermitteln lassen.

Die $^{13}$C-NMR- Spektren werden in einem Gemisch aus Hexachlorbutadien und Tetrachlorethan-$d_2$ bei erhöhter Temperatur (365 K) gemessen. Alle $^{13}$C-NMR-Spektren der gemessenen Polypropylen-Proben werden auf das Resonanzsignal von Tetrachlorethan-$d_2$ ($\delta$ = 73.81 ppm) geeicht.

Zur Bestimmung der Triaden-Taktizität des Polypropylens werden die Methyl-Resonanzsignale im $^{13}$C-NMR-Spektrum zwischen 23 und 16 ppm betrachtet; vgl. J. C. Randall, Polymer Sequence Determination: Carbon-13 NMR Method, Academic Press New York 1978; A. Zambelli, P. Locatelli, G. Bajo, F. A. Bovey, Macromolucules 8 (1975), 687-689; H. N. Cheng, J. A. Ewen, Makromol. Chem. 190 (1989), 1931-1943. Drei aufeinander folgende 1-2-insertierte Propeneinheiten, deren Methylgruppen in der "Fischer-Projektion" auf der gleichen Seite angeordnet sind, bezeichnet man als mm - Triade ($\delta$ = 21.0 ppm bis 22.0 ppm). Zeigt nur die zweite Methylgruppe der drei aufeinander folgenden Propeneinheiten zur anderen Seite, spricht man von einer rr-Triade ($\delta$ = 19.5 ppm bis 20.3 ppm) und zeigt nur die dritte Methylgruppe der drei aufeinander folgenden Propeneinheiten zur anderen Seite, von einer mr-Triade ($\delta$ = 20.3 ppm bis 21.0 ppm). Die Triaden-Taktizität berechnet man nach folgender Formel:

$$TT(\%) = mm / (mm + mr + rr) \cdot 100$$

Wird eine Propeneinheit invers in die wachsende Polymerkette insertiert, spricht man von einer 2-1-Insertion; vgl. T. Tsutsui, N. Ishimaru, A. Mizuno, A. Toyota, N. Kashiwa, Polymer 30, (1989), 1350-56. Folgende verschiedene strukturelle Anordnungen sind möglich:

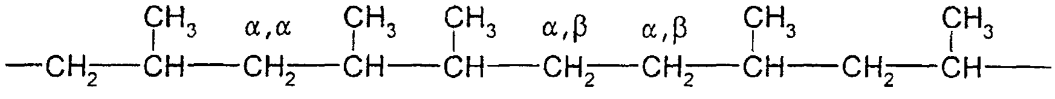

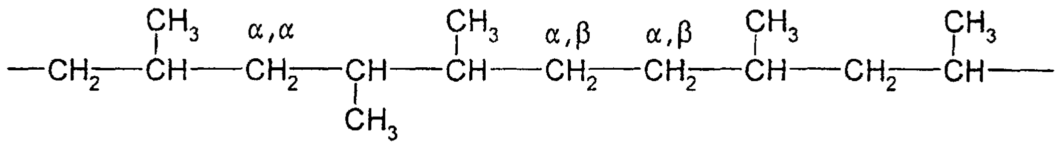

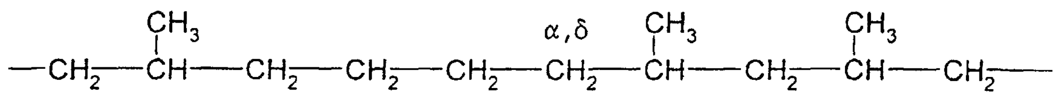

Der Anteil an 2-1-insertierten Propeneinheiten (RI) kann nach folgender Formel berechnet werden:

$$RI\ (\%) = 0.5\ Ia,\beta\ (Ia,a + Ia,\beta + Ia,d) \cdot 100,$$

wobei

- Ia,a die Summe der Intensitäten der Resonanzsignale bei $\delta$ = 41.84, 42.92 und 46.22 ppm,
- Ia,β die Summe der Intensitäten der Resonanzsignale bei $\delta$ = 30.13, 32.12, 35.11 und 35.57 ppm sowie
- Ia,d die Intensität des Resonanzsignals bei $\delta$ = 37.08 ppm bedeuten.

Das isotaktische Polypropylen, das mit dem erfindungsgemäßen Katalysatorsystem hergestellt worden ist, zeichnet sich durch einen Anteil an 2-1-insertierten Propeneinheiten RI < 0.5% bei einer Triaden-Taktizität TT > 98.0% und einen Schmelzpunkt > 153°C aus, wobei $M_W/M_n$ des erfindungsgemäßen Polypropylens zwischen 2.5 und 3.5 liegt. Die mit dem erfindungsgemäßen Katalysatorsystem herstellbaren Copolymere zeichnen sich durch eine gegenüber dem Stand der Technik deutlich höhere Molmasse aus. Gleichzeitig sind solche Copolymere durch Einsatz des erfindungsgemäßen Katalysatorsystems mit hoher Produktivität bei technisch relevanten Prozessparametern ohne Belagsbildung herstellbar.

Die nach dem erfindungsgemäßen Verfahren hergestellten Polymere sind insbesondere zur Herstellung reißfester, harter und steifer Formkörper wie Fasern, Filamente, Spritzgußteile, Folien, Platten oder Großhohlkörpern (z.B. Rohre) geeignet.

Die Erfindung wird durch folgende, die Erfindung jedoch nicht einschränkenden Beispiele erläutert.

Allgemeine Angaben: Die Herstellung und Handhabung der organometallischen Verbindungen erfolgte unter Ausschluß von Luft und Feuchtigkeit unter Argon-Schutzgas (Schlenk-Technik bzw. Glove-Box). Alle benötigten Lösemittel wurden vor Gebrauch mit Argon gespült und über Molsieb absolutiert.

Beispiel 1: Dimethylsilandiylbis(2-methyl-4-(4'-ethyl-phenyl)-indenyl)zirkoniumdichlorid (rac/meso-Verhältnis 1:6)

Darstellung des geträgerten Katalysatorsystems:

62 mg Dimethylsilandiylbis(2-methyl-4-(4'-ethyl-phenyl)-indenyl)zirkoniumdichlorid (rac/meso 1:6; 0.092 mmol) wurden mit 4,3 ml 30%iger MAO-Lösung (20 mmol) in Toluol und weiteren 1,9 ml Toluol vermischt und lichtgeschützt 1 h bei Raumtemperatur gerührt. Dann wurden 4 g $SiO_2$ unter Rühren zugegeben und der Ansatz nach beendeter Zugabe 10 Minuten nachgerührt. Nach Entfernung des Lösungsmittels im Ölpumpenvakuum wurde ein frei fließendes Pulver erhalten.

Polymerisation

Ein trockener 16-$dm^3$-Reaktor wurde zunächst mit Stickstoff und anschließend mit Propylen gespült und mit 10 $dm^3$ flüssigem Propylen befüllt. Es wurden dann 0,5 $cm^3$ einer 20%igen Triisobutylaluminiumlösung in Varsol verdünnt mit 30 $cm^3$ Exxsol in den Reaktor gegeben und der Ansatz 15 Minuten bei 30°C gerührt. Anschließend wurde die Katalysator-Suspension aus 2 g des geträgerten Metallocen-Katalysators in 20 $cm^3$ Exxsol in den Reaktor gegeben. Das

Reaktionsgemisch wurde dann auf 60°C aufgeheizt (4°C/Minute) und das Polymerisationssystem 1 Stunde durch Kühlung auf 60°C gehalten. Die Polymerisation wurde durch Entgasen gestoppt und das erhaltene Polymer im Vakuum getrocknet. Es wurden 2,0 kg Polypropylen-Pulver erhalten. Der Reaktor zeigte keine Beläge an Innnenwand oder Rührer. Die Katalysatoraktivität betrug 1000 g PP/(g Kat x h).

Beispiel 2: Dimethylsilandiylbis(2-n-butyl-4-phenyl-indenyl)zirkoniumdichlorid (rac/meso-Verhältnis 1:2)

Darstellung des geträgerten Katalysatorsystems

Aus 65 mg Dimethylsilandiylbis(2-n-butyl-4-phenyl-indenyl)zirkoniumdichlorid (rac/meso 1:2; 0.091 mmol) wurde analog Beispiel 1 das entsprechende geträgerte Katalysatorsystem hergestellt.
Polymerisation
Die Polymerisation wurde analog zu Beispiel 1 durchgeführt. Der Reaktor zeigte keine Beläge an Innnenwand oder Rührer. Es wurden 2,4 kg Polypropylen-Pulver erhalten. Die Katalysatoraktivität betrug 1200 g PP/(g Kat x h).

Beispiel 3: Dimethylsilandiylbis(2-ethyl-4-(4'-tert.butyl-phenyl)-indenyl)zirkoniumdichlorid (rac/meso-Verhältnis 1:1)

Darstellung des geträgerten Katalysatorsystems

Aus 70 mg Dimethylsilandiylbis(2-ethyl-4-(4'-tert.butyl-phenyl)-indenyl)zirkoniumdichlorid (rac/meso 1:1; 0.091 mmol) wurde analog Beispiel 1 das entsprechende geträgerte Katalysatorsystem hergestellt.
Polymerisation
Die Polymerisation wurde analog zu Beispiel 1 durchgeführt. Der Reaktor zeigte keine Beläge an Innnenwand oder Rührer. Es wurden 3,0 kg Polypropylen-Pulver erhalten. Die Katalysatoraktivität betrug 1500 g PP/(g Kat x h).

Beispiel 4: Dimethylsilandiylbis(2-methyl-4-(4'-methyl-phenyl)-indenyl)zirkoniumdichlorid (rac/meso-Verhältnis 2:3)

Darstellung des geträgerten Katalysatorsystems

Aus 60 mg Dimethylsilandiylbis(2-methyl-4-(4'-methyl-phenyl)-indenyl)zirkoniumdichlorid (rac/meso 2:3; 0.091 mmol) wurde analog Beispiel 1 das entsprechende geträgerte Katalysatorsystem hergestellt.
Polymerisation
Die Polymerisation wurde analog zu Beispiel 1 durchgeführt. Der Reaktor zeigte keine Beläge an Innnenwand oder Rührer. Es wurden 2,2 kg Polypropylen-Pulver erhalten. Die Katalysatoraktivität betrug 1100 g PP/(g Kat x h).

Beispiel 5: Dimethylgermandiylbis(2-methyl-4-(4'-tert.-butyl-phenyl)-indenyl)-zirkoniumdichlorid (rac/meso-Verhältnis 1:1)

Darstellung des geträgerten Katalysatorsystems

Aus 71 mg Dimethylgermandiylbis(2-methyl-4-(4'-tert.-butyl-phenyl)-indenyl)-zirkonium-dichlorid (rac/meso 1:1; 0.091 mmol) wurde analog Beispiel 1 das entsprechende geträgerte Katalysatorsystem hergestellt.
Polymerisation
Die Polymerisation wurde analog zu Beispiel 1 durchgeführt. Der Reaktor zeigte keine Beläge an Innnenwand oder Rührer. Es wurden 5.2 kg Polypropylen-Pulver erhalten. Die Katalysatoraktivität betrug 2600 g PP/(g Kat x h).
Vergleichsbeispiel:
rac-Dimethylsilandiylbis(2-methyl-4-phenyl-indenyl)zirkoniumdichlorid Darstellung des geträgerten Katalysatorsystems
Aus 57 mg rac-Dimethylsilandiylbis(2-methyl-4-phenyl-indenyl)zirkoniumdichlorid (0.091 mmol) wurde analog Beispiel 1 das entsprechende geträgerte Katalysatorsystem hergestellt.
Polymerisation
Die Polymerisation wurde analog zu Beispiel 1 durchgeführt. Der Reaktor zeigte keine Beläge an Innnenwand oder Rührer. Es wurden 2,4 kg Polypropylen-Pulver erhalten. Die Katalysatoraktivität betrug 1200 g PP/(g Kat x h).
Die Polymerisationsergebnisse aus den Beispielen sind in Tabelle I zusammengestellt.

Tabelle I:

| Beispiel | rac/meso | Gehalt rac-Form | Ausbeute [kg PP] | Aktivität [kg PP/g Kat/h] | Smp. [°C] |
|---|---|---|---|---|---|
| 1 | 1:6 | 14.2% | 2,0 | 1,0 | 155 |
| 2 | 1:2 | 33.3% | 2,4 | 1,2 | 156 |
| 3 | 1:1 | 50% | 3,0 | 1,5 | 156 |
| 4 | 2:3 | 40% | 2,2 | 1,1 | 154 |
| 5 | 1 : 1 | 50% | 5,2 | 2,6 | 156 |
| Vergleich | rac | 100% | 2,4 | 1,2 | 150 |

**Patentansprüche**

**1.** Katalysatorsystem enthaltend

a) mindestens einen Träger,
b) mindestend einen Cokatalysator,
c) ein rac-meso-Isomerengemisch mindestens eines Metallocens der Formel (I)

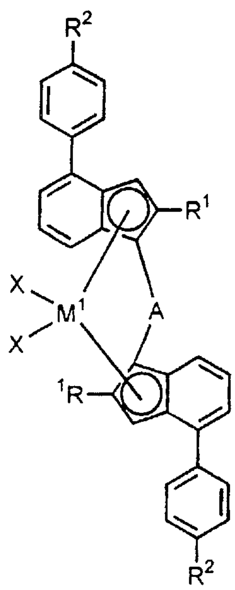

(I)

worin

$R^1$ und $R^2$ gleich oder verschieden sind und ein Wasserstoffatom oder eine $C_1$-$C_{20}$-Kohlenwasserstoffgruppe, mit der Einschränkung, daß $R^1$ nicht Methyl ist, wenn $R^2$ gleich Wasserstoff ist,
$M^1$ ein Übergangsmetall der Gruppe 4, 5 oder 6 des Periodensystems der Elemente ist,
A eine Verbrückung der Formel

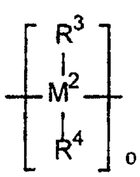 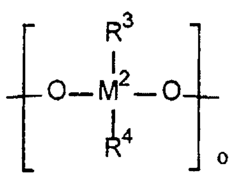 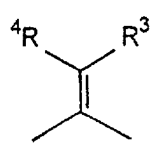

oder $=BR^3$, $AlR^3$, -S-, -SO-, $-SO_2-$, $=NR^3$, $=PR^3$, $=P(O)R^3$, o-Phenyten, 2,2'-Biphenylen ist,
worin
$M^2$ Kohlenstoff, Silizium, Germanium, Zinn, Stickstoff oder Phosphor ist,
o gleich 1, 2, 3 oder 4 ist,
$R^3$ und $R^4$ unabhängig voneinander gleich oder verschieden ein Wasserstoffatom, Halogen, eine $C_1$-$C_{20}$-kohlenstoffhaltige Gruppe bedeuten und $R^3$ und $R^4$ gemeinsam ein mono- oder polycyclisches Ringsystem bilden können, und
X gleich oder verschieden für ein Wasserstoffatom, ein Halogenatom, eine Hydroxylgruppe, eine $C_1$-$C_{10}$-Alkylgruppe, eine $C_6$-$C_{15}$-Arylgruppe, eine $C_1$-$C_{10}$-Alkoxygruppe, eine $C_6$-$C_{15}$-Aryloxygruppe, eine Benzylgruppe, eine $NR^5_2$-Gruppe, wobei $R^5$ gleich oder verschieden eine $C_1$-$C_{10}$-Alkylgruppe, eine $C_6$-$C_{15}$-Arylgruppe, eine $(CH_3)_3Si$-Gruppe steht,
wobei das Verhältnis von rac-Isomer zu meso-Isomer des Metallocens der Formel (I) im erfindungsgemäßen Katalysatorsystem zwischen 1:10 und 2:1 liegt.

2. Katalysatorsystem nach Anspruch 1, **dadurch gekennzeichnet, daß** die Verbindung der Formel (I)

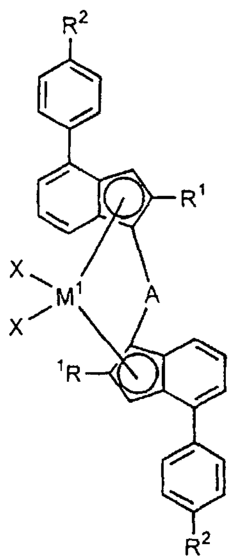

(I)

worin

$R^1$ und $R^2$ gleich oder verschieden sind und ein Wasserstoffatom, eine $C_1$-$C_{20}$-Alkylgruppe, eine $C_6$-$C_{14}$-Arylgruppe, eine $C_2$-$C_{20}$-Alkenylgruppe, mit der Einschränkung, daß $R^1$ nicht Methyl ist, wenn $R^2$ gleich Wasserstoff ist,
$M^1$ ein Übergangsmetall wie Titan, Zirkonium, Hafnium, Vanadium, Niob, Tantal, Chrom, Molybdän oder Wolfram, ist,
A für Dimethylsilandiyl, Dimethylgermandiyl, Ethyliden, Methylethyliden, 1,1-Dimethylethyliden, 1,2-Dimethylethyliden, Tetramethylethyliden, Isopropyliden, Phenylmethylmethyliden oder Diphenylmethyliden, steht,
X gleich oder verschieden für ein Wasserstoffatom, Fluor, Chlor, Brom oder Iod, eine Hydroxylgruppe, Methyl, Ethyl, Propyl, iso-Propyl, n-Butyl, iso-Butyl, sec-Butyl, tert.-Butyl, Hexyl, Cyclohexyl, Phenyl, Naphthyl, Methoxy, Ethoxy, tert.-Butoxy, eine $NR^5_2$-Gruppe, wobei $R^5$ gleich oder verschieden Methyl und/oder Ethyl, ein Chloratom, ein Fluoratom, steht,
wobei das Verhältnis von rac-Isomer zu meso-Isomer des Metallocens der Formel (I) im erfindungsgemäßen Katalysatorsystem zwischen 1:2 und 3:2 liegt.

3. Katalysatorsystem nach Anspruch 1 oder 2, **dadurch gekennzeichnet, daß** die Verbindung der Formel (I)

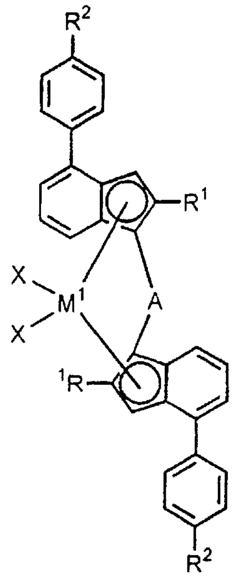

(I)

worin

$R^1$ und $R^2$ gleich oder verschieden sind und Wasserstoff Methyl, Ethyl, n-Propyl, iso-Propyl, n-Butyl, sec-Butyl, iso-Butyl, tert.-Butyl, Pentyl und Hexyl bedeuten, mit der Einschränkung, daß $R^1$ nicht Methyl ist, wenn $R^2$ gleich Wasserstoff ist,
$M^1$ für Zirkonium, steht,
A für Dimethylsilandiyl, Dimethylgermandiyl oder Ethyliden, steht,
X gleich oder verschieden für Wasserstoff, Fluor, Chlor, Brom, eine Hydroxylgruppe, Methyl, Ethyl, Propyl, iso-Propyl, n-Butyl, iso-Butyl, sec-Butyl, tert.-Butyl, Hexyl, Cyclohexyl, Phenyl, Naphthyl, Methoxy, Ethoxy oder tert.-Butoxy, steht,
wobei das Verhältnis von rac-Isomer zu meso-Isomer des Metallocens der Formel (I) im erfindungsgemäßen Katalysatorsystem zwischen 1:2 und 3:2 liegt.

**4.** Katalysatorsystem nach einem der Ansprüche 1 bis 3, **dadurch gekennzeichnet, daß** als Verbindung der Formel (I) Dimethylsilandiylbis(2-methyl-4-(4'-tert.-butyl-phenyl)-indenyl)zirkoniumdichlorid Dimethytsilandiylbis(2-methyl-4-(4'-tert.-butyl-phenyl)-indenyl)hafnuimdichlorid, Dimethylsilandiylbis(2-methyl-4-(4'-tert.-butyl-phenyl)-indenyl)titandichlorid, Dimethylsilandiylbis(2-methyl-4-(4'-methyl-phenyl)-indenyl)zirkoniumdichiorid, Dimethylsilandiylbis(2-methyl-4-(4'-ethyl-phenyl)-indenyl)zirkoniumdichlorid, Dimethylsilandiylbis(2-methyl-4-(4'-n-propyl-phenyl)-indenyl)zirkoniumdichlorid, Dimethylsilandiylbis(2-methyl-4-(4'-iso-propyl-phenyl)-indenyl)zirkoniumdichlorid, Dimethylsilandiylbis(2-methyl-4-(4'-n-butyl-phenyl)-indenyl)zirkoniumdichlorid, Dimethylsilandiylbis(2-methyl-4-(4'-hexyl-phenyl)-indenyl)zirkoniumdichlorid, Dimethylsilandiylbis(2-methyl-4-(4'-sec-butyl-phenyl)-indenyl)zirkoniumdichlorid, Dimethylsilandiylbis(2-ethyl-4-phenyl)-indenyl)zirkoniumdichlorid, Dimethylsilandiylbis(2-ethyl-4-(4'-methyl-phenyl)-indenyl)zirkoniumdichlorid, Dimethylsilandiylbis(2-ethyl-4-(4'-ethyl-phenyl)-indenyl)zirkoniumdichlorid, Dimethylsilandiylbis(2-ethyl-4-(4'-n-propyl-phenyl)-indenyl)zirkoniumdichlorid, Dimethylsilandiylbis (2-ethyl-4-(4'-iso-propyl-phenyl)-indenyl)zirkoniumdichlorid, Dimethylsilandiylbis(2-ethyl-4-(4'-n-butyl-phenyl)-indenyl)zirkoniumdichlorid, Dimethylsilandiylbis(2-ethyl-4-(4'-hexyl-phenyl)-indenyl)zirkoniumdichlorid, Dimethylsilandiylbis(2-ethyl-4-(4'-pentyl-phenyl)-indenyl)zirkoniumdichlorid, Dimethylsilandiylbis(2-ethyl-4-(4'-cyclohexyl-phenyl)-indenyl)zirkoniumdichlorid, Dimethylsilandiylbis(2-ethyl-4-(4'-sec-butyl-phenyl)-indenyl)zirkoniumdichlorid, Dimethylsilandiylbis(2-ethyl-4-(4'-tert.-butyl-phenyl)-indenyl)zirkoniumdichlorid, Dimethylsilandiylbis(2-n-propyl-4-phenyl)-indenyl)zirkoniumdichlorid, Dimethylsilandiylbis(2-n-propyl-4-(4'-methyl-phenyl)-indenyl)zirkoniumdichlorid, Dimethylsilandiylbis(2-n-propyl-4-(4'-ethyl-phenyl)-indenyl)zirkoniumdichlorid, Dimethylsilandiylbis(2-n-propyl-4-(4'-n-propyl-phenyl)-indenyl)zirkoniumdichlorid, Dimethylsilandiylbis(2-n-propyl-4-(4'-iso-propyl-phenyl)-indenyl)zirkoniumdichlorid, Dimethylsilandiylbis(2-n-propyl-4-(4'-n-butyl-phenyl)-indenyl)zirkoniumdichlorid, Dimethylsilandiylbis(2-n-propyl-4-(4'-hexyl-phenyl)-indenyl)zirkoniumdichlorid, Dimethylsilandiylbis(2-n-propyl-4-(4'-cyclohexyl-phenyl)-indenyl)zirkoniumdichlorid, Dimethylsilandiylbis(2-n-propyl-4-(4'-sec-butyl-phenyl)-indenyl)zirkoniumdichlorid, Dimethylsilandiylbis(2-n-propyl-4-(4'-tert.-butyl-phenyl)-indenyl)zirkoniumdichlorid, Dimethylsilandiylbis(2-n-butyl-4-phenyl)-indenyl)zirkoniumdichlorid, Dimethylsilandiylbis(2-n-butyl-4-(4'-methyl-phenyl)-indenyl)zirkoniumdichlorid, Dimethylsilandiylbis(2-n-butyl-4-(4'-ethyl-phenyl)-indenyl)zirkoniumdichlorid, Dimethylsilandiylbis(2-n-butyl-4-(4'-n-propyl-phenyl)-indenyl)zirkoniumdichlorid, Dimethylsilandiylbis(2-n-butyl-4-(4'-iso-propyl-phenyl)-indenyl)zirkoniumdichlorid, Dimethylsilandiylbis(2-n-butyl-4-(4'-n-butyl-phenyl)-indenyl) zirkoniumdichlorid, Dimethylsilandiylbis(2-n-butyl-4-(4'-hexyl-phenyl)-indenyl)zirkoniumdichlorid, Dimethylsilandiylbis(2-n-butyl-4-(4'-cyclohexyl-phenyl)-indenyl)zirkoniumdichlorid, Dimethylsilandiylbis(2-n-butyl-4-(4'-sec-butyl-phenyl)-indenyl)zirkoniumdichlorid, Dimethylsilandiylbis(2-n-butyl-4-(4'-tert.-butyl-phenyl)-indenyl)zirkoniumdichlorid, Dimethylsilandiylbis(2-hexyl-4-phenyl)-indenyl)zirkoniumdichlorid, Dimethylsilandiylbis(2-hexyl-4-(4'-methyl-phenyl)-indenyl)zirkoniumdichlorid, Dimethylsilandiylbis(2-hexyl-4-(4'-ethyl-phenyl)-indenyl)zirkoniumdichlorid, Dimethylsilandiylbis(2-hexyl-4-(4'-n-propyl-phenyl)-indenyl)zirkoniumdichlorid, Dimethylsilandiylbis(2-hexyl-4-(4'-iso-propyl-phenyl)-indenyl)zirkoniumdichlorid, Dimethylsilandiylbis(2-hexyl-4-(4'-n-butyl-phenyl)-indenyl)zirkoniumdichlorid, Dimethylsilandiylbis(2-hexyl-4-(4'-hexyl-phenyl)-indenyl)zirkoniumdichlorid, Dimethylsilandiylbis (2-hexyl-4-(4'-cyclohexyl-phenyl)-indenyl)zirkoniumdichlorid, Dimethylsilandiylbis(2-hexyl-4-(4'-sec-butyl-phenyl)-indenyl)zirkoniumdichlorid, Dimethylsilandiylbis(2-hexyl-4-(4'-tert.-butyl-phenyl)-indenyl)zirkoniumdichlorid, Dimethylsilandiylbis(2-methyl-4-(4'-tert.-butyl-phenyl)-indenyl)zirkoniumbis(dimethylamid), Dimethylsilandiylbis (2-ethyl-4-(4'-tert.-butyl-phenyl)-indenyl)zirkoniumdibenzyl, Dimethylsilandiylbis(2-methyl-4-(4'-tert.-butyl-phenyl)-indenyl)zirkoniumdimethyl, Dimethylgermandiylbis(2-ethyl-4-(4'-tert.-butyl-phenyl)-indenyl)zirkoniumdichlorid, Dimethylgermandiylbis(2-methyl-4-(4'-tert.-butyl-phenyl)-indenyl)zirkoniumdichlorid, Dimethylgermandiylbis (2-ethyl-4-(4'-tert.-butyl-phenyl)-indenyl)hafniumdichlorid, Dimethylgermandiylbis(2-propyl-4-(4'-tert-butyl-phenyl)-indenyl)titandichlorid, Ethylidenbis(2-ethyl-4-phenyl)-indenyl)zirkoniumdichlorid, Ethylidenbis(2-ethyl-4-(4'-tert.-butyl-phenyl)-indenyl)zirkoniumdichlorid, Ethylidenbis(2-n-propyl-4-(4'-tert-butyl-phenyl)-indenyl)zirkoniumdichlorid, Ethylidenbis(2-n-butyl-4-(4'-tert.-butyl-phenyl)-indenyl)titandichlorid, Ethylidenbis(2-hexyl-4-(4'-tert.-butyl-phenyl)-indenyl)zirkoniumdibenzyl, Ethylidenbis(2-ethyl-4-(4'-tert.-butyl-phenyl)-indenyl)hafniumdibenzyl, Ethylidenbis(2-methyl-4-(4'-tert.-butyl-phenyl)-indenyl)titandibenzyl, Ethylidenbis(2-methyl-4-(4'-tert.-butyl-phenyl)-indenyl)zirkoniumdichforid, Ethylidenbis(2-ethyl-4-(4'-tert.-butyl-phenyl)-indenyl)hafniumdimethyl, Ethylidenbis(2-n-propyl-4--phenyl)-indenyl)titandimethyl, Ethylidenbis(2-ethyl-4-(4'-tert.-butyl-phenyl)-indenyl)zirkoniumbis (dimethylamid), Ethylidenbis(2-ethyl-4-(4'-tert.-butyl-phenyl)-indenyl)hafniumbis(dimethylamid), Ethylidenbis (2-ethyl-4-(4'-tert.-butyl-phenyl)-indenyl)titanbis(dimethylamid), Methylethylidenbis(2-ethyl-4-(4'-tert.-butyl-phenyl)-indenyl)zirkoniumdichlorid, Methylethylidenbis(2-ethyl-4-(4'-tert.-butyl-phenyl)-indenyl)hafniumdichlorid, Phenylphosphandiyl(2-ethyl-4-(4'-tert.-butyl-phenyl)-indenyl)zirkoniumdichlorid, Phenylphosphandiyl(2-methyl-4-(4'-tert.-butyl-phenyl)-indenyl)zirkoniumdichlorid, Phenylphosphandiyl(2-ethyl-4-(4'-tert.-butyl-phenyl)-indenyl) zirkoniumdichlorid, eingesetzt wird.

5. Katalysatorsystem nach einem der Ansprüche 1 bis 4, **dadurch gekennzeichnet, daß** als Cokatalysator eine Verbindung vom Typ eines Aluminoxans oder einer Lewis-Säure oder einer ionischen Verbindung, die durch Reaktion mit einem Metallocen dieses in eine kationische Verbindung überführt, eingesetzt wird.

6. Katalysatorsystem nach einem der Ansprüche 1 bis 5, **dadurch gekennzeichnet, daß** als Träger ein organischer oder anorganischer, inerter Feststoff eingesetzt wird.

7. Verfahren zur Herstellung eines Polyolefins durch Polymerisation eines oder mehrerer Olefine in Gegenwart eines Katalysatorsystems nach einem der Ansprüche 1 bis 6.

8. Verwendung eines Katalysatorsystems gemäß einem der Ansprüche 1 bis 6 zur Herstellung von Polyolefinen.

## Claims

1. A catalyst system comprising

   a) at least one support,
   b) at least one cocatalyst,
   c) an rac/meso isomer mixture of at least one metallocene of the formula (I)

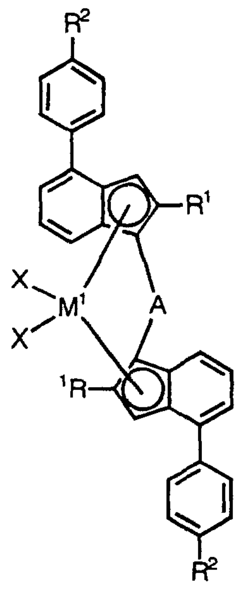

(I)

where

$R^1$ and $R^2$ are identical or different and are each a hydrogen atom or a $C_1$-$C_{20}$-hydrocarbon group, with the restriction that $R^1$ is not methyl when $R^2$ is hydrogen,
$M^1$ is a transition metal of group 4, 5 or 6 of the Periodic Table of the Elements,
A is a bridge of the formula

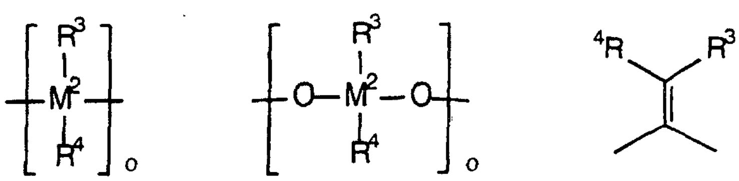

or $=BR^3$, $AlR^3$, -S-, -SO-, $-SO_2-$, $=NR^3$, $=PR^3$, $=P(O)R^3$, o-phenylene, 2,2'-biphenylene,
where
$M^2$ is carbon, silicon, germanium, tin, nitrogen or phosphorus,
o is 1, 2, 3 or 4,
$R^3$ and $R^4$ are identical or different and are each, independently of one another, a hydrogen atom, halogen, a $C_1$-$C_{20}$-group or $R^3$ and $R^4$ can together form a monocyclic or polycyclic ring system, and
X are identical or different and are each a hydrogen atom, a halogen atom, a hydroxyl group, a $C_1$-$C_{10}$-alkyl group, a $C_6$-$C_{15}$-aryl group, a
$C_1$-$C_{10}$-alkoxy group, a $C_6$-$C_{15}$-aryloxy group, a benzyl group, an $NR^5_2$ group, where $R^5$ are identical or different and are each a $C_1$-$C_{10}$-alkyl group, $C_6$-$C_{15}$-aryl group, a $(CH_3)_3Si$ group,
where the ratio of rac isomer to meso isomer of the metallocene of the formula (I) in the catalyst system of the invention is from 1:10 to 2:1.

2. A catalyst system as claimed in claim 1, wherein the compound of the formula (I)

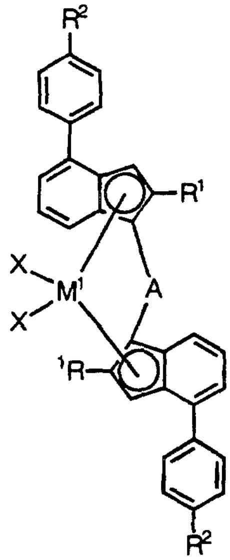

(I)

is one in which

$R^1$ and $R^2$ are identical or different and are each a hydrogen atom, a $C_1$-$C_{20}$-alkyl group, a $C_6$-$C_{14}$-aryl group, a $C_2$-$C_{20}$-alkenyl group, with the restriction that $R^1$ is not methyl when $R^2$ is hydrogen,
$M^1$ is a transition metal such as titanium, zirconium, hafnium, vanadium, niobium, tantalum, chromium, molybdenum or tungsten,
A is dimethylsilanediyl, dimethylgermanediyl, ethylidene, methylethylidene, 1,1-dimethylethylidene, 1,2-dimethylethylidene, tetramethylethylidene, isopropylidene, phenylmethylmethylidene or diphenylmethylidene,
X are identical or different and are each a hydrogen atom, fluorine, chlorine; bromine or iodine, a hydroxyl group, methyl, ethyl, propyl, isopropyl,
n-butyl, isobutyl, sec-butyl, tert-butyl, hexyl, cyclohexyl, phenyl, naphthyl, methoxy, ethoxy, tert-butoxy, an $NR^5_2$ group, where $R^5$ are identical or different and are each methyl and/or ethyl, a chlorine atom, a fluorine atom,
where the ratio of rac isomer to meso isomer of the metallocene of the formula (I) in the catalyst system is from 1:2 to 3:2.

**3.** A catalyst system as claimed in claim 1 or 2, wherein the compound of the formula (I)

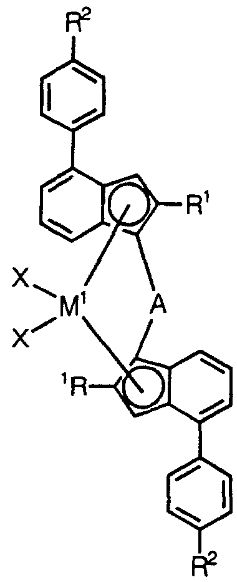

(I)

is one in which

$R^1$ and $R^2$ are identical or different and are each hydrogen, methyl, ethyl, n-propyl, isopropyl, n-butyl, sec-butyl, isobutyl, tert-butyl, pentyl or hexyl, with the restriction that $R^1$ is not methyl when $R^2$ is hydrogen,
$M^1$ is zirconium,
A is dimethylsilanediyl, dimethylgermanediyl or ethylidene,
X are identical or different and are each hydrogen, fluorine, chlorine, bromine a hydroxyl group, methyl, ethyl, propyl, isopropyl, n-butyl, isobutyl, sec-butyl, tert-butyl, hexyl, cyclohexyl, phenyl, naphthyl, methoxy, ethoxy or tert-butoxy,
where the ratio of rac isomer to meso isomer of the metallocene of the formula (I) in the catalyst system is from 1:2 to 3:2.

**4.** A catalyst system as claimed in any of claims 1 to 3, wherein the compound of the formula (I) which is used is

dimethylsilanediylbis(2-methyl-4-(4'-tert-butylphenyl)indenyl)zirconium dichloride
dimethylsilanediylbis(2-methyl-4-(4'-tert-butylphenyl)indenyl) hafnium dichloride
dimethylsilanediylbis(2-methyl-4-(4'-tert-butylphenyl)indenyl)titanium dichloride
dimethylsilanediylbis(2-methyl-4-(4'-methylphenyl)indenyl)zirconium dichloride
dimethylsilanediylbis(2-methyl-4-(4'-ethylphenyl)indenyl)zirconium dichloride
dimethylsilanediylbis(2-methyl-4-(4'-n-propylphenyl)indenyl)zirconium dichloride
dimethylsilanediylbis(2-methyl-4-(4'-isopropylphenyl)indenyl)zirconium dichloride
dimethylsilanediylbis(2-methyl-4-(4'-n-butylphenyl)indenyl)zirconium dichloride
dimethylsilanediylbis(2-methyl-4-(4'-hexylphenyl)indenyl)zirconium dichloride
dimethylsilanediylbis(2-methyl-4-(4'-sec-butylphenyl)indenyl)zirconium dichloride
dimethylsilanediylbis(2-ethyl-4-phenyl)indenyl)zirconium dichloride dimethylsilanediylbis(2-ethyl-4-(4'-methylphenyl)indenyl)zirconium dichloride
dimethylsilanediylbis(2-ethyl-4-(4'-ethylphenyl)indenyl)zirconium dichloride
dimethylsilanediylbis(2-ethyl-4-(4'-n-propylphenyl)indenyl)zirconium dichloride
dimethylsilanediylbis(2-ethyl-4-(4'-isopropylphenyl)indenyl)zirconium dichloride
dimethylsilanedlylbis(2-ethyl-4-(4'-n-butylphenyl)indenyl)zirconium dichloride
dimethylsilanediylbis(2-ethyl-4-(4'-hexylphenyl)indenyl)zirconium dichloride
dimethylsilanediylbis(2-ethyl-4-(4'-pentylphenyl)indenyl)zirconium dichloride
dimethylsilanediylbis(2-ethyl-4-(4'-cyclohexylphenyl)indenyl)zirconium dichloride
dimethylsilanediylbis(2-ethyl-4-(4'-sec-butylphenyl)indenyl)zirconium dichloride
dimethylsilanediylbis(2-ethyl-4-(4'-tert-butylphenyl)indenyl)zirconium dichloride
dimethylsilanediylbis(2-n-propyl-4-phenyl)indenyl)zirconium dichloride dimethylsilanediylbis(2-n-propyl-4-(4'-methylphenyl)indenyl)zirconium dichloride
dimethylsilanediylbis(2-n-propyl-4-(4'-ethylphenyl)indenyl)zirconium

dichloride
dimethylsilanediylbis(2-n-propyl-4- (4'-n-propylphenyl)indenyl)zirconium dichloride
dimethylsilanediylbis(2-n-propyl-4-(4'-isopropylphenyl)indenyl)zirconium dichloride
dimethylsilanediylbis(2-n-propyl-4-(4'-n-butylphenyl)indenyl)zirconium dichloride
dimethylsilanediylbis(2-n-propyl-4-(4'-hexylphenyl)indenyl)zirconium dichloride
dimethylsilanediylbis(2-n-propyl-4-(4'-cyclohexylphenyl)indenyl)zirconium dichloride
dimethylsilanediylbis(2-n-propyl-4-(4'-sec-butylphenyl)indenyl)zirconium dichloride
dimethylsilanediylbis(2-n-propyl-4-(4'-tert-butylphenyl)indenyl)zirconium dichloride
dimethylsilanediylbis(2-n-butyl-4-phenyl)indenyl)zirconium dichloride dimethylsilanediylbis(2-n-butyl-4-(4'-methylphenyl)indenyl)zirconium dichloride
dimethylsilanediylbis(2-n-butyl-4-(4'-ethylphenyl)indenyl)zirconium dichloride
dimethylsilanediylbis(2-n-butyl-4-(4'-n-propylphenyl)indenyl)zirconium dichloride
dimethylsilanediylbis(2-n-butyl-4-(4'-isopropylphenyl)indenyl)zirconium dichloride
dimethylsilanediylbis(2-n-butyl-4-(4'-n-butylphenyl)indenyl)zirconium dichloride
dimethylsilanediylbis(2-n-butyl-4-(4'-hexylphenyl)indenyl)zirconium dichloride
dimethylsilanediylbis(2-n-butyl-4-(4'-cyclohexylphenyl)indenyl)zirconium dichloride
dimethylsilanediylbis(2-n-butyl-4-(4'-sec-butylphenyl)indenyl)zirconium dichloride
dimethylsilanediylbis(2-n-butyl-4-(4'-tert-butylphenyl)indenyl)zirconium dichloride
dimethylsilanediylbis(2-hexyl-4-phenyl)indenyl)zirconium dichloride dimethylsilanediylbis(2-hexyl-4-(4'-methylphenyl)indenyl)zirconium dichloride
dimethylsilanediylbis(2-hexyl-4-(4'-ethylphenyl)indenyl)zirconium dichloride
dimethylsilanediylbis(2-hexyl-4-(4'-n-propylphenyl)indenyl)zirconium dichloride
dimethylsilanediylbis(2-hexyl-4-(4'-isopropylphenyl)indenyl)zirconium dichloride
dimethylsilanediylbis(2-hexyl-4-(4'-n-butylphenyl)indenyl)zirconium dichloride
dimethylsilanediylbis(2-hexyl-4-(4'-hexylphenyl)indenyl)zirconium dichloride
dimethylsilanediylbis(2-hexyl-4-(4'-cyclohexylphenyl)indenyl)zirconium dichloride
dimethylsilanediylbis(2-hexyl-4-(4'-sec-butylphenyl)indenyl)zirconium dichloride
dimethylsilanediylbis(2-hexyl-4-(4'-tert-butylphenyl)indenyl)zirconium dichloride
dimethylsilanediylbis(2-methyl-4-(4'-tert-butylphenyl)indenyl)zirconium bis(dimethylamide)
dimethylsilanediylbis(2-ethyl-4- (4'-tert-butylphenyl)indenyl) dibenzylzirconium
dimethylsilanediylbis(2-methyl-4-(4'-tert-butylphenyl)indenyl)dimethylzirconium
dimethylgermanediylbis(2-ethyl-4-(4'-tert-butylphenyl)indenyl)zirconium dichloride
dimethylgermanediylbis(2-methyl-4-(4'-tert-butylphenyl)indenyl)zirconium dichloride
dimethylgermanediylbis(2-ethyl-4-(4'-tert-butylphenyl)indenyl)hafnium dichloride
dimethylgermanediylbis(2-propyl-4-(4'-tert-butylphenyl)indenyl)titanium dichloride
ethylidenebis(2-ethyl-4-phenyl)indenyl)zirconium dichloride
ethylidenebis(2-ethyl-4-(4'-tert-butylphenyl)indenyl)zirconium dichloride
ethylidenebis(2-n-propyl-4-(4'-tert-butylphenyl)indenyl)zirconium dichloride
ethylidenebis(2-n-butyl-4-(4'-tert-butylphenyl)indenyl)titanium dichloride
ethylidenebis(2-hexyl-4-(4'-tert-butylphenyl)indenyl)dibenzylzirconium
ethylidenebis(2-ethyl-4-(4'-tert-butylphenyl)indenyl)dibenzylhafnium
ethylidenebis(2-methyl-4-(4'-tert-butylphenyl)indenyl)dibenzyltitanium
ethylidenebis(2-methyl-4-(4'-tert-butylphenyl)indenyl)zirconium dichloride
ethylidenebis(2-ethyl-4-(4'-tert-butylphenyl)indenyl)dimethylhafnium
ethylidenebis(2-n-propyl-4-phenyl)indenyl)dimethyltitanium
ethylidenebis(2-ethyl-4-(4'-tert-butylphenyl)indenyl)zirconium bis(dimethylamide)
ethylidenebis(2-ethyl-4-(4'-tert-butylphenyl)indenyl)hafnium bis(dimethylamide)
ethylidenebis(2-ethyl-4-(4'-tert-butylphenyl)indenyl)titanium bis(dimethylamide)
methylethylidenebis(2-ethyl-4-(4'-tert-butylphenyl)indenyl)zirconium dichloride
methylethylidenebis(2-ethyl-4-(4'-tert-butylphenyl)indenyl)hafnium dichloride
phenylphosphinediyl(2-ethyl-4-(4'-tert-butylphenyl)indenyl)zirconium dichloride
phenylphosphinediyl(2-methyl-4-(4'-tent- butylphenyl)indenyl)zirconium dichloride
phenylphosphinediyl(2-ethyl-4-(4'-tert-butylphenyl)indenyl)zirconium dichloride.

**5.** A catalyst system as claimed in any of claims 1 to 4, wherein the cocatalyst used is an aluminoxane or a Lewis acid or an ionic compound which reacts with a metallocene to convert the latter into a cationic compound.

**6.** A catalyst system as claimed in any of claims 1 to 5, wherein the support used is an organic or inorganic, inert solid.

**7.** A process for preparing a polyolefin by polymerization of one or more olefins in the presence of a catalyst system as claimed in any of claims 1 to 6.

**8.** The use of a catalyst system as claimed in any of claims 1 to 6 for preparing polyolefins.

## Revendications

**1.** Système catalytique comprenant:

a) au moins un support,
b) au moins un cocatalyseur,
c) un mélange d'isomères rac-méso d'au moins un métallocène répondant à la formule (I)

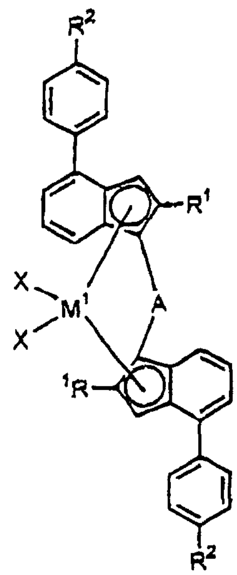

(I)

dans laquelle:

$R^1$ et $R^2$, identiques ou différents, sont un atome d'hydrogène ou un radical hydrocarboné en $C_1$-$C_{20}$, étant entendu que, lorsque $R^1$ n'est pas un radical méthyle, lorsque $R^2$ est de l'hydrogène,
$M^1$ est un métal de transition du groupe 4, 5 ou 6 de la Classification Périodique des Eléments,
A est un pontage de formule

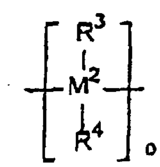 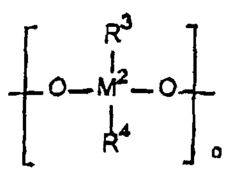 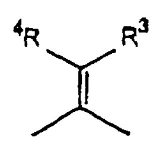

ou bien $=BR^3$, $AlR^3$, -S-, -SO-, $-SO_2-$, $=NR^3$, $=PR^3$, $=P(O)R^3$, o-phénylène 2,2'-biphénylène, à la condition que
dans lesquels
$M^2$ est du carbone, du silicium, du germanium, du zinc, de l'azote ou du phosphore,
o est égal à 1, 2, 3 ou 4,
$R^3$ et $R^4$, indépendamment les uns des autres, sont identiques ou différents, et représentent un atome d'hydrogène, un atome d'halogène, un radical hydrocarboné en $C_1$ à $C_{20}$ et
$R^3$ et $R^4$ peuvent former entre eux un noyau mono- ou polycyclique et

les X, identiques ou différents, sont un atome d'hydrogène, atome d'halogène, un groupe hydroxyle, un radical alkyle en $C_1$-$C_{10}$, aryle en $C_6$-$C_{15}$, alcoxy en $C_1$-$C_{10}$, aryloxy en $C_6$-$C_{15}$, benzyle, ou un groupe $NR^5_2$, dans lequel les $R^5$, identiques ou différents, sont un radical alkyle en $C_1$-$C_{10}$, aryle en $C_6$-$C_{15}$ ou un groupe $(CH_3)_3Si$,

étant entendu que le rapport isomère rac/isomère méso du métallocène de formule (I) dans le système catalytique de la présente invention est compris entre 1/10 et 2/1.

**2.** Système catalytique selon la revendication 1, **caractérisé en ce que** le composé de formule (I)

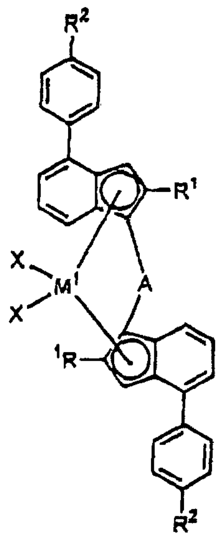

(I)

dans laquelle

$R^1$ et $R^2$, identiques ou différents, sont un atome d'hydrogène, un radical alkyle en $C_1$-$C_{20}$, aryle en $C_6$-$C_{14}$, alkényle en $C_2$-$C_{20}$, à condition que $R_3$ ne soit pas du méthyle, lorsque $R^2$ est de l'hydrogène,
$M^1$ est un métal de transition tel que titane, zirconium, hafnium, vanadium, niobium, tantale, chrome, molybdène ou tungstène,
A est un radical diméthylsilandiyle, diméthylgermandiyle, éthylidène, méthyléthylidène, 1,1-diméthyléthylidène, 1,2-diméthyléthylidène, tétraméthyléthylidène, isopropylidène, phénylméthylméthylidène ou diphénylméthylidène,
X, identiques ou différents, représentent un atome d'hydrogène, de fluor, de chlore, de brome ou d'iode, un groupe hydroxyle, un radical méthyle, éthyle, propyle, iso-propyle, n-butyle, iso-butyle, sec.-butyle, tert.-butyle, hexyle, cyclohexyle, phényle, naphtyle, méthoxy, éthoxy, tert-butoxy, ou un groupe $NR^5_2$, dans lequel les $R^5$, identiques ou différents, sont un radical méthyle et/ou éthyle, un atome de chlore ou un atome de fluor,

étant donné que le rapport isomère-rac/isomère méso du métallocène de formule (I) dans le système catalytique selon la présente invention est compris entre 1/2 et 3/2.

**3.** Système catalytique selon la revendication 1 ou 2, **caractérisé en ce que** le composé de formule (I)

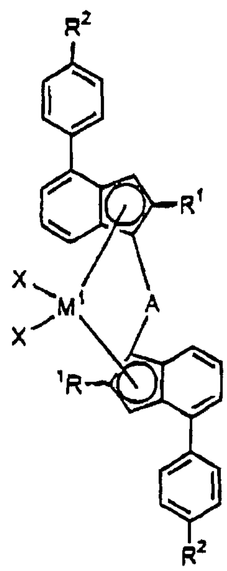

(I)

dans laquelle:

$R^1$ et $R^2$, identiques ou différents, représentent un atome d'hydrogène, un radical méthyle, éthyle, n-propyle, iso-propyle, n-butyle, sec-butyle, iso-butyle, tert.butyle, pentyle ou hexyle, à condition que $R^1$ ne soit pas du méthyle lorsque $R^2$ est de l'hydrogène,
$M^1$ est du zirconium,
A est un radical diméthylsilandiyle, diméthylgermandiyle ou éthylidène,
X, identiques ou différents, représentent un atome d'hydrogène, fluor, chlore ou brome, un groupe hydroxyle, un radical méthyle, éthyle, propyle, iso-propyle, n-butyle, iso-butyle, sec-butyle, tert.-butyle, hexyle, cyclohexyle, phényle, naphtyle, méthoxy, éthoxy ou tert.-butoxy,

étant entendu que le rapport isomère rac/isomère méso du métallocène de formule (I) dans le système catalytique de la présente invention est compris entre ½ et 3/2.

**4.** Système catalytique selon l'une quelconque des revendications 1 à 3, **caractérisé en ce que** ou tant que le composé de formule (I) met en oeuvre du:

dichlorure de diméthylsilandiylbis(2-méthyl-4-(4'-tert.-butyl-phényl)-indényl) zirconium,
dichlorure de diméthylsilandiylbis(2-méthyl-4-(4'-tert.butyl-phényl)-indényl) hafnium,
dichlorure de diméthylsilandiylbis(2-méthyl-4-(4'-tert.butyl-phényl)-indényl) titane,
dichlorure de diméthylsilandiylbis(2-méthyl-4-(4'-tert.butyl-phényl)-indényl) zirconium,
dichlorure de diméthylsilandiylbis(2-méthyl-4-(4'-éthyl-phényl)-indényl) zirconium,
dichlorure de diméthylsilandiylbis(2-méthyl-4-(4'-n-propyl-phényl)-indényl) zirconium,
dichlorure de diméthylsilandiylbis(2-méthyl-4-(4'-iso-propyl-phényl)-indényl) zirconium,
dichlorure de diméthylsilandiylbis(2-méthyl-4-(4'-n-butyl-phényl)-indényl) zirconium,
dichlorure de diméthylsilandiylbis(2-méthyl-4-(4'-hexyl-phényl)-indényl) zirconium,
dichlorure de diméthylsilandiylbis(2-méthyl-4-(4'-sec-butyl-phényl)-indényl) zirconium,
dichlorure de diméthylsilandiylbis(2-éthyl-4-phényl)-indényl) zirconium,
dichlorure de diméthylsilandiylbis(2-éthyl-4-(4'-méthyl-phényl)-indényl) zirconium,
dichlorure de diméthylsilandiylbis(2-éthyl-4-(4'-éthyl-phényl)-indényl) zirconium,
dichlorure de diméthylsilandiylbis(2-éthyl-4-(4'-n-propyl-phényl)-indényl) zirconium,
dichlorure de diméthylsilandiylbis(2-éthyl-4-(4'-iso-propyl-phényl)-indényl) zirconium,
dichlorure de diméthylsilandiylbis(2-éthyl-4-(4'-n-butyl-phényl)-indényl) zirconium,
dichlorure de diméthylsilandiylbis(2-éthyl-4-(4'-hexyl-phényl)-indényl) zirconium,
dichlorure de diméthylsilandiylbis(2-éthyl-4-(4'-pentyl-phényl)-indényl) zirconium,
dichlorure de diméthylsilandiylbis(2-éthyl-4-(4'-cyclohexyl-phényl)-indényl) zirconium,
dichlorure de diméthylsilandiylbis(2-éthyl-4-(4'-sec-butyl-phényl)-indényl) zirconium,
dichlorure de diméthylsilandiylbis(2-éthyl-4-(4'-tert.-butyl-phényl)-indényl) zirconium,
dichlorure de diméthylsilandiylbis(2-n-propyl-4-phényl)-indényl) zirconium,

dichlorure de diméthylsilandiylbis(2-n-propyl-4-(4'-méthyl-phényl)-indényl) zirconium,
dichlorure de diméthylsilandiylbis(2-n-propyl-4-(4'-éthyl-phényl)-indényl) zirconium,
dichlorure de diméthylsilandiylbis(2-n-propyl-4-(4'-n-propyl-phényl)-indényl) zirconium,
dichlorure de diméthylsilandiylbis(2-n-propyl-4-(4'-iso-propyl-phényl)-indényl) zirconium,
dichlorure de diméthylsilandiylbis(2-n-propyl-4-(4'-n-butyl-phényl)-indényl) zirconium,
dichlorure de diméthylsilandiylbis(2-n-propyl-4-(4'-hexyl-phényl)-indényl) zirconium,
dichlorure de diméthylsilandiylbis(2-n-propyl-4-(4'-cyclohexyl-phényl)-indényl) zirconium,
dichlorure de diméthylsilandiylbis(2-n-propyl-4-(4'-sec-butyl-phényl)-indényl) zirconium,
dichlorure de diméthylsilandiylbis(2-n-propyl-4-(4'-tert.butyl-phényl)-indényl) zirconium,
dichlorure de diméthylsilandiylbis(2-n-butyl-4-phényl)-indényl) zirconium,
dichlorure de diméthylsilandiylbis(2-n-butyl-4-(4'-méthyl-phényl)-indényl) zirconium,
dichlorure de diméthylsilandiylbis(2-n-butyl-4-(4'-éthyl-phényl)-indényl) zirconium,
dichlorure de diméthylsilandiylbis(2-n-butyl-4-(4'-n-propyl-phényl)-indényl) zirconium,
dichlorure de diméthylsilandiylbis(2-n-butyl)-4-(4'-iso-propyl-phényl)-indényl) zirconium,
dichlorure de diméthylsilandiylbis(2-n-butyl-4-(4'-n-butyl-phényl)-indényl) zirconium,
dichlorure de diméthylsilandiylbis(2-n-butyl-4-(4'-hexyl-phényl)-indényl) zirconium,
dichlorure de diméthylsilandiylbis(2-n-butyl-4-(4'-cyclohexyl-phényl)-indényl) zirconium,
dichlorure de diméthylsilandiylbis(2-n-butyl-4-(4'-sec-butyl-phényl)-indényl) zirconium,
dichlorure de diméthylsilandiylbis(2-n-butyl-4-(4'-tert.-butyl-phényl)-indényl) zirconium,
dichlorure de diméthylsilandiylbis(2-hexyl-4-phényl)-indényl) zirconium,
dichlorure de diméthylsilandiylbis(2-hexyl-4-(4'-méthyl-phényl)-indényl) zirconium,
dichlorure de diméthylsilandiylbis(2-hexyl-4-(4'-éthyl-phényl)-indényl) zirconium,
dichlorure de diméthylsilandiylbis(2-hexyl-4-(4'-n-propyl-phényl)-indényl) zirconium,
dichlorure de diméthylsilandiylbis(2-hexyl-4-(4'-iso-propyl-phényl)-indényl) zirconium,
dichlorure de diméthylsilandiylbis(2-hexyl-4-(4'-n-butyl-phényl)-indényl) zirconium,
dichlorure de diméthylsilandiylbis(2-hexyl-4-(4'-hexyl-phényl)-indényl) zirconium,
dichlorure de diméthylsilandiylbis(2-hexyl-4-(4'-cyclohexyl-phényl)-indényl) zirconium,
dichlorure de diméthylsilandiylbis(2-hexyl-4-(4'-sec-butyl-phényl)-indényl) zirconium,
dichlorure de diméthylsilandiylbis(2-hexyl-4-(4'-tert.butyl-phényl)-indényl) zirconium,
diméthylsilandiylbis(2-méthyl-4-(4'-tert.-butyl-phényl)-indényl) zirconium (diméthylamide),
diméthylsilandiylbis(2-éthyl-4-(4'-tert.-butyl-phényl)-indényl) zirconium dibenzyle,
diméthylsilandiylbis(2-méthyl-4-(4'-tert.-butyl-phényl)-indényl) zirconium diméthyle,
dichlorure de diméthylgermandiylbis(2-éthyl-4-(4'-tert.-butyl-phényl)-indényl) zirconium,
dichlorure de diméthylgermandiylbis(2-méthyl-4-(4'-tert.-butyl-phényl)-indényl) zirconium,
dichlorure de diméthylgermandiylbis(2-éthyl-4-(4'-tert.-butyl-phényl)-indényl) hafnium,
dichlorure de diméthylgermandiylbis(2-éthyl-4-(4'-tert.-butyl-phényl)-indényl) titane,
dichlorure d'éthylidènebis(2-éthyl-4-phényl)-indényl) zirconium,
dichlorure d'éthylidènebis(2-éthyl-4-(4'-tert.butyl-phényl)-indényl) zirconium,
dichlorure d'éthylidènebis(2-n-propyl-4-(4'-tert.-butyl-phényl)-indényl) zirconium,
dichlorure d'éthylidènebis(2-n-butyl-4-(4'-tert.butyl-phényl)-indényl)titane,
Ethylidènebis(2-hexyl-4-(4'-tert.butyl-phényl)-indényl)zirconium dibenzyle,
Ethylidènebis(2-éthyl-4-(4'-tert.butyl-phényl)-indényl)hafnium dibenzyle,
Ethylidènebis(2-méthyl-4-(4'-tert.butyl-phényl)-indényl)titane dibenzyle,
Dichlorure d'éthylidènebis(2-méthyl-4-(4'-tert.butyl-phényl)-indényl) zirconium,
Ethylidènebis(2-éthyl-4-(4'-tert.butyl-phényl)-indényl)hafnium diméthyle,
Ethylidènebis(2-n-propyl-4-phényl)-indényl)titane diméthyle,
Ethylidènebis(2-éthyl-4-(4'-tert.butyl-phényl)-indényl) zirconiumbis(diméthylamide),
Ethylidènebis(2-éthyl-4-(4'-tert.butyl-phényl)-indényl)hafniumbis (diméthylamide),
Ethylidènebis(2-éthyl-4-(4'-tert.butyl-phényl)-indényl)titanebis (diméthylamide),
Dichlorure de méthyléthylidenèbis(2-éthyl-4-(4'-tert.butyl-phényl)-indényl) zirconium,
Dichlorure de méthyléthylidenèbis (2-éthyl-4-(4'-tert.butyl-phényl)-indényl) hafnium,
Dichlorure de phénylphosphandiyl(2-éthyl-4-(4'-tert.butyl-phényl)-indényl) zirconium,
Dichlorure de phénylphosphandiyl(2-méthyl-4-(4'-tert.butyl-phényl)-indényl) zirconium,
Dichlorure de phénylphosphandiyl(2-éthyl-4-(4'-tert.butyl-phényl)-indényl) zirconium.

**5.** Système catalytique selon l'une quelconque des revendications 1 à 4, **caractérisé en ce que**, en tant que cocatalyseur, on utilise un composé du type d'un aluminoxane ou d'un acide de Lewis ou d'un composé ionique, qui par réaction avec un métallocène transforme celui-ci en un composé cationique.

**6.** Système catalytique selon l'une quelconque des revendications 1 à 5, **caractérisé en ce que** le support est un matériau solide, organique ou inorganique, inerte.

**7.** Procédé de fabrication d'une polyoléfine par polymérisation d'une ou plusieurs oléfines en présence d'un système catalytique selon l'une quelconque des revendications 1 à 6.

**8.** Utilisation d'un système catalytique selon l'une quelconque des revendications 1 à 6 pour la fabrication de polyoléfines.